(19) Europäisches Patentamt
European Patent Office
Office européen des brevets

(11) **EP 3 451 484 B1**

(12) **EUROPEAN PATENT SPECIFICATION**

(45) Date of publication and mention
of the grant of the patent:
**15.02.2023 Bulletin 2023/07**

(21) Application number: **17859439.6**

(22) Date of filing: **09.06.2017**

(51) International Patent Classification (IPC):
*H02J 7/00* (1968.09)    *H02J 7/04* (1968.09)

(52) Cooperative Patent Classification (CPC):
**H02J 7/0016; H02J 7/00034; H02J 7/007182;
H02J 7/04;** H02J 7/00714; H02J 2207/40

(86) International application number:
**PCT/CN2017/087829**

(87) International publication number:
**WO 2018/068523 (19.04.2018 Gazette 2018/16)**

(54) **CHARGING SYSTEM AND BATTERY MANAGEMENT METHOD**

LADESYSTEM UND EIN BATTERIEVERWALTUNGSVERFAHREN

SYSTÈME DE CHARGE ET PROCÉDÉ DE GESTION DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2016 PCT/CN2016/101944
15.02.2017 PCT/CN2017/073653**

(43) Date of publication of application:
**06.03.2019 Bulletin 2019/10**

(73) Proprietor: **GUANGDONG OPPO MOBILE
TELECOMMUNICATIONS
CORP., LTD.
Wusha, Chang'an
Dongguan,
Guangdong 523860 (CN)**

(72) Inventors:
• **CHEN, Shebiao
Dongguan
Guangdong 523860 (CN)**
• **ZHANG, Jialiang
Dongguan
Guangdong 523860 (CN)**

(74) Representative: **Hoffmann Eitle
Patent- und Rechtsanwälte PartmbB
Arabellastraße 30
81925 München (DE)**

(56) References cited:
EP-A1- 3 051 660      WO-A1-2016/074391
WO-A2-98/28672      CN-A- 103 001 297
CN-A- 103 248 077      CN-A- 103 269 108
CN-A- 105 048 602      CN-A- 105 471 001
CN-A- 105 471 033      CN-U- 205 544 410
US-A- 6 040 684      US-A1- 2009 027 013
US-A1- 2016 064 962

**Description**

TECHNICAL FIELD

This disclosure relates to the field of charging technology, and more particularly to a battery management circuit and a battery management method, an equalization circuit and an equalization method, and a device to be charged.

BACKGROUND

At present, devices to be charged, such as smart phones, are enjoying increasing popularity among consumers. However, devices to be charged need to be charged frequently due to their high power consumption.

In order to improve charging speed, a practical scheme is to charge devices to be charged with great current. The greater the current, the higher the charging speed is. Nevertheless, the heating problem of devices to be charged is also getting more serious.

Therefore, requirements on reducing heating of devices to be charged are proposed.

US 2016/0064962 A1 discloses a charging device comprising a battery, which can be charged directly or via a boost circuit. The battery may comprise one cell or several cells in series,

EP 3 051 660 A1 discloses a power storage control method for suppressing a burden imposed on a cell when voltages of cells are equalized. The voltages are equalized by using an RLC series circuit.

US 6,040,684 A discloses using pulsed DC voltage for fast charging a lithium battery.

SUMMARY

Embodiments of the disclosure provide a charging system and a battery management method applicable to the charging system, where, on the premise of guaranteed charging speed, heating of the device to be charged can be reduced. The present invention is defined with the appended independent claims. Further embodiments are defined in the appended dependent claims.

BRIEF DESCRIPTION OF THE DRAWINGS

FIG. 1 is a schematic structural diagram illustrating a charging system according to an embodiment of the present disclosure.
FIG. 2 is a schematic diagram illustrating a coupling relationship between an equalization circuit and cells according to an embodiment of the present disclosure.
FIG. 3 is an equivalent circuit diagram illustrating an RLC series circuit according to an embodiment of the present disclosure.

FIG. 4 is a waveform diagram illustrating input voltage of an RLC series circuit according to an embodiment of the present disclosure.
FIG. 5 is a diagram illustrating correspondence between an input voltage waveform of an RLC series circuit and a current waveform of an RLC series circuit according to an embodiment of the present disclosure.
FIG. 6 is an exemplary diagram illustrating an alternative implementation of a switch circuit according to an embodiment of the present disclosure.
FIG. 7 is an exemplary diagram illustrating another alternative implementation of a switch circuit according to an embodiment of the present disclosure.
FIG. 8 is a flowchart illustrating a control method according to an embodiment of the present disclosure.
FIG. 9 is a flowchart illustrating a control method according to another embodiment of the present disclosure.
FIG. 10 is a schematic structural diagram illustrating a charging system according to another embodiment of the present disclosure.
FIG. 11 is a schematic structural diagram illustrating a device to be charged, not covered by the appended claims.
FIG. 12 is a schematic diagram illustrating a waveform of a pulsating DC (direct current) current according to an embodiment of the present disclosure.
FIG. 13 is a flowchart illustrating a fast charging process according to an embodiment of the present disclosure.
FIG. 14 is a schematic flowchart illustrating first two steps of a battery management method according to the invention.

DETAILED DESCRIPTION

A power supply device configured to charge a device to be charged has been provided in the related art. The power supply device works in a constant-voltage mode, where voltage output by the power supply device remains nearly constant, such as 5V, 9V, 12V, 20V, etc.

Voltage output by the power supply device is not suitable for being applied directly to a battery. Instead, the voltage output by the power supply device needs to be converted by a conversion circuit of the device to be charged, so that expected charging voltage and/or charging current of the battery of the device to be charged can be acquired.

The conversion circuit is configured to convert voltage output by the power supply device, so as to meet the requirements on expected charging voltage and/or charging current of the battery.

As an implementation, the conversion circuit can be a charging management module, such as a charging integrated circuit (IC), which, when the battery is charged, is configured to manage the charging voltage and/or charging current of the battery. The conversion circuit functions as a voltage feedback module and/or a current feedback module, so as to implement management of the charging voltage and/or charging current of the battery.

For example, a charging process of the battery can include at least one of a trickle charging stage, a constant-current charging stage, and a constant-voltage charging stage. In the trickle charging stage, the conversion circuit can utilize a current feedback loop, so as to make current flowing into the battery in the trickle charging stage satisfy expected charging current of the battery (such as a first charging current). In the constant-current charging stage, the conversion circuit can utilize a current feedback loop, so as to make current flowing into the battery in the constant-current charging stage satisfy expected charging current of the battery (such as a second charging current, which may be higher than the first charging current). In the constant-voltage charging stage, the conversion circuit can utilize a voltage feedback loop, so as to make voltage applied to the battery in the constant-voltage charging stage satisfy expected charging voltage of the battery.

As one implementation, when the voltage output by the power supply device is higher than expected charging voltage of the battery, the conversion circuit can be configured to reduce the voltage output by the power supply device, so as to make reduced charging voltage meet requirements on the expected charging voltage of the battery. As another implementation, when the voltage output by the power supply device is lower than the expected charging voltage of the battery, the conversion circuit can be configured to boost the voltage output by the power supply device, so as to make boosted charging voltage meet requirements on the expected charging voltage of the battery.

As yet another implementation, the voltage output by the power supply device is a constant 5V voltage, for example. When the battery includes a single cell (for example, a lithium battery cell, with a 4.2V charging cut-off voltage), the conversion circuit (such as a Buck circuit) can reduce the voltage output by the power supply device, so as to make the reduced charging voltage meet requirements on the expected charging voltage of the battery.

As still another implementation, the voltage output by the power supply device is a constant 5V voltage, for example. When the power supply device charges two or more single-cell batteries coupled in series (for example, a lithium battery cell, with a 4.2V charging cut-off voltage), the conversion circuit (such as a Boost circuit) can boost the voltage output by the power supply device, so as to make the boosted charging voltage meet requirements on the expected charging voltage of the battery.

The conversion circuit is limited by low circuit conversion efficiency, which results in electrical energy that fails to be converted dissipating in the form of heat. The heat can be accumulated inside the device to be charged. Since designed space and heat dissipation space of the device to be charged are both very small, for example, the physical size of a user's mobile terminal is increasingly lighter and thinner, and a large number of electronic components are densely arranged in the mobile terminal at the same time, difficulty in designing the conversion circuit is increased. In addition, it is difficult to remove promptly heat accumulated inside the device to be charged, which in turn results in abnormality of the device to be charged.

For example, heat accumulated inside the conversion circuit may cause heat interference with electronic components near the conversion circuit, which results in working abnormality of the electronic components. For another example, the heat accumulated inside the conversion circuit may shorten service life of the conversion circuit and the electronic components near the conversion circuit. For yet another example, the heat accumulated inside the conversion circuit may cause heat interference with the battery, which in turn brings about abnormality of charge and discharge of the battery. For still another example, the heat accumulated inside the conversion circuit may raise temperature of the device to be charged and thus influence user experience in the charging process. For still another example, the heat accumulated inside the conversion circuit may result in short circuit of the conversion circuit itself, causing abnormality of charging since the voltage output by the power supply device is applied directly to the battery. In case that the battery is charged with excessive voltage for a long time, battery explosion may even occur, thus putting users at risk.

According to an embodiment of the present disclosure, a power supply device with adjustable output voltage is provided. The power supply device can acquire state information of a battery. The state information of a battery can include power and/or current voltage of the battery. The power supply device can adjust output voltage of the power supply device itself according to the state information of the battery acquired, so as to meet requirements on expected charging voltage and/or charging current of the battery. Output voltage adjusted by the power supply device can be applied directly to the battery to charge the battery (referred to as "direct charging" hereinafter). In addition, in the constant-current charging stage of the battery, the output voltage adjusted by the power supply device can be applied directly to the battery for charging.

The power supply device can function as a voltage feedback module and/or a current feedback module, so as to implement management of the charging voltage and/or charging current of the battery.

The power supply device adjusting the output voltage of the power supply device itself according to the state information of the battery acquired can include the following. The power supply device can acquire the state information of the battery in real time and adjust the output voltage of the power supply device itself according to real-time state information of the battery acquired each time, so as to meet requirements on the expected charging voltage and/or charging current of the battery.

The power supply device adjusting the output voltage of the power supply device itself according to the real-time state information of the battery acquired can include the following. With increase in voltage of the battery in the charging process, the power supply device can acquire current state information of the battery at different time points in the charging process and adjust in real time the output voltage of the power supply device itself according to the current state information of the battery, so as to meet requirements on the expected charging voltage and/or charging current of the battery.

For example, the charging process of the battery can include at least one of the trickle charging stage, the constant-current charging stage, and the constant-voltage charging stage. In the trickle charging stage, the power supply device can output the first charging current in the tricked charging stage to charge the battery, so as to meet requirements on expected charging current (the first charging current can be a constant DC current) of the battery. In the constant-current charging stage, the power supply device can utilize the current feedback loop to make the current output in the constant-current charging stage from the power supply device to the battery meet requirements of the battery on expected charging current, such as the second charging current. The second charging current may be a pulsating waveform current and may be greater than the first charging current, where a peak value of the pulsating waveform current in the constant-current charging stage may be greater than magnitude of the constant DC current in the trickle charging stage, and "constant-current" in the constant-current charging stage may refer to a situation where peak value or average value of the pulsating waveform current remain nearly constant. In the constant-voltage charging stage, the power supply device can utilize the voltage feedback loop to make the voltage output in the constant-voltage charging stage from the power supply device to the device to be charged (that is, constant DC voltage) remain constant.

For example, in embodiments of the present disclosure, the power supply device can be mainly configured to control the constant-current charging stage of the battery of the device to be charged. In other embodiments, control of the trickle charging stage and the constant-voltage charging stage of the battery of the device to be charged can also be cooperatively completed by the power supply device of the embodiment of the present disclosure and an extra charging chip of the device to be charged. Compared with charging power of the battery received in the constant-current charging stage, charging powers of the battery received in the trickle charging stage and in the constant-voltage charging stage are lower, so conversion efficiency loss and heat accumulation of the charging chip of the device to be charged are acceptable. It should be noted that, in embodiments of the present disclosure, the constant-current charging stage or the constant-current stage can refer to a charging mode of controlling output current of the power supply device but does not require that the output current of the power supply device remain completely constant, and may be, for example, a peak value or an average value of a pulsating waveform current output by the power supply device remaining nearly constant, or remaining nearly constant within a certain time period. Practically, for example, in the constant-current charging stage, the power supply device usually charges the battery in a multi-stage constant current charging manner.

Multi-stage constant current charging can include N constant-current stages, where N is an integer not less than two. In the multi-stage constant current charging, a first stage charging begins with a pre-determined charging current. The N constant-current stages of the multi-stage constant current charging are executed in sequence from the first stage to an (N-1)th stage. When a previous constant-current stage ends and a next constant-current stage begins, the peak value or average value of the pulsating waveform may decrease. When voltage of the battery reaches a threshold value of charging cut-off voltage, the previous constant-current stage ends and the next constant-current stage begins. A current conversion process between two adjacent constant-current stages may be a gradual process or a step-like process.

In addition, in case that the current output by the power supply device is a pulsating DC current, the constant-current mode can refer to a charging mode of controlling a peak value or an average value of the pulsating DC current, that is, controlling the peak value of the current output by the power supply device not greater than current corresponding to the constant-current mode. Furthermore, in case that the current output by the power supply device is an AC (alternating current) current, the constant-current mode can refer to a charging mode of controlling a peak value of the AC current.

In addition, it should be noted that, in the embodiment of the present disclosure, the device to be charged can be a terminal. The "terminal" can include but is not limited to a device configured via a wired line and/or a wireless interface to receive/transmit communication signals. Examples of the wired line may include, but are not limited to, at least one of a public switched telephone network (PSTN), a digital subscriber line (DSL), a digital cable, a direct connection cable, and/or other data connection lines or network connection lines. Examples of the wireless interface may include, but are not limited to, a wireless interface with a cellular network, a wireless local area network (WLAN), a digital television network (such as a digital video broadcasting-handheld (DVB-H) network), a satellite network, an AM-FM broadcast transmitter, and/or with other communication terminals. A communication terminal configured to communicate via a wireless interface may be called a "wireless communication terminal", a "wireless terminal", and/or a "mobile terminal". Examples of a mobile terminal may include, but are not limited to, a satellite or cellular telephone, a personal communication system (PCS) terminal capable of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and/or other electronic devices equipped with radio telephone capability such as a conventional laptop or a handheld receiver. In addition, in the embodiment of the present disclosure, the device to be charged or terminal can also include a power bank. The power bank can receive charge from the power supply device and thus store the charge, so as to provide the charge to other electronic devices.

In addition, in an embodiment of the present disclosure, when a pulsating waveform voltage output by the power supply device is applied directly to a battery of the device to be charged to charge the battery, charging current can be represented in the form of a pulsating wave (such as a steamed bun wave). It can be understood that, the charging current can charge the battery in an intermittent manner. Period of the charging current can vary with frequency of an input AC such as an AC power grid. For instance, frequency corresponding to the period of the charging current is N times (N is a positive integer) or N times the reciprocal of frequency of a power grid. Additionally, when the charging current charges the battery in an intermittent manner, current waveform corresponding to the charging current can include one pulsation or one group of pulsations synchronized with the power grid.

According to the invention , when the battery is charged (such as in at least one of the trickle charging stage, the constant-current charging stage, and the constant-voltage charging stage), the battery receives a pulsating DC (direction remains constant, and magnitude varies with time) output by the power supply device. In other examples, not covered by the appended claims, the battery may receive an AC (both direction and magnitude vary with time), or a DC (that is, a constant DC, neither magnitude nor direction varies with time) output by the power supply device.

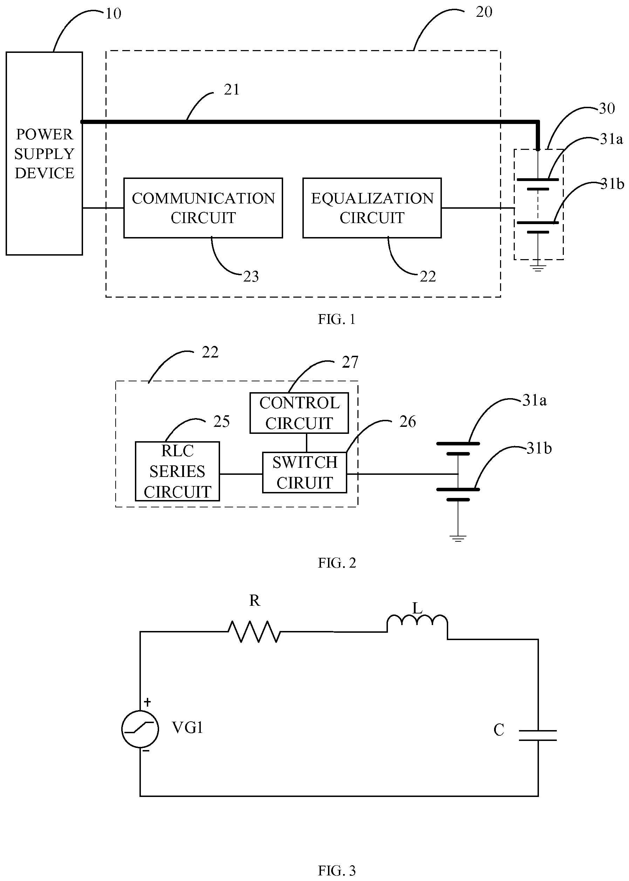

As to a conventional device to be charged, the device to be charged usually has only one single cell. When the single cell is charged with high charging current, heating of the device to be charged is serious. In order to guarantee charging speed and reduce heating of the device to be charged, structure of the cell of the device to be charged is modified in the embodiment of the present disclosure. A battery with cells coupled in series, together with a battery management circuit that is able to conduct direct charging on the battery with cells coupled in series, is provided. Since, to achieve equal charging speed, charging current of the battery with cells coupled in series is 1/N time the magnitude of charging current of the battery with one single cell, where N represents the number of cells coupled in series of the device to be charged. For the equal charging speed, the battery management circuit of the embodiment of the present disclosure acquires lower charging current from an external power supply device, thereby reducing heating in the charging process. The following will describe the embodiment of the disclosure in detail in conjunction with FIG. 1.

FIG. 1 is a schematic structural diagram illustrating a charging system according to an embodiment of the present disclosure. The charging system includes a power supply device 10, a battery management circuit 20, and a battery 30. The battery management circuit 20 can be configured to manage the battery 30. As an implementation, the battery management circuit 20 can manage a charging process of the battery 30, such as selecting a charging channel, controlling charging voltage and/or charging current, and so on. According to the invention, the battery management circuit 20 is configured to equalize voltage between the cells of the battery 30.

The battery management circuit 20 includes a first charging channel 21 and a communication circuit 23.

The first charging channel 21 is configured to receive charging voltage and/or charging current from the power supply device 10 and charge the battery 30 by applying the charging voltage and/or charging current to the battery 30.

In other words, the first charging channel 21 conducts direct charging on the battery 30 by applying directly the charging voltage and/or charging current received from the power supply device 10 to the battery 30. "Direct charging" is elaborated in the whole disclosure and will not be repeated herein. The first charging channel 21 can be referred to as a direct charging channel. The direct charging channel does not need to be provided with a conversion circuit such as a charging IC. That is to say, unlike a conventional charging channel, the direct charging channel does not need to convert the charging voltage and/or charging current received from the power supply device and then apply converted charging voltage and/or charging current to the battery. Instead, the direct charging channel can apply directly the charging voltage and/or charging current received from the power supply device to the battery.

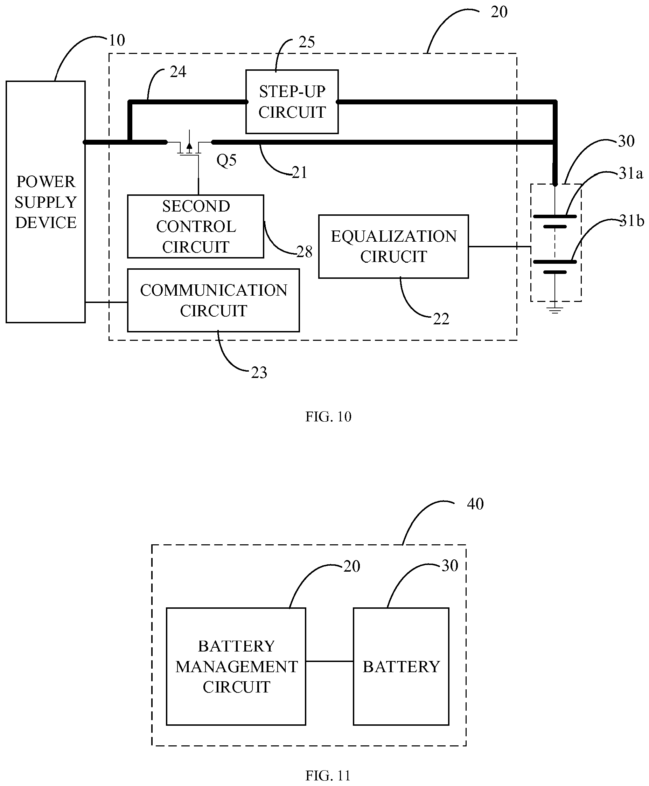

The first charging channel 21 can be, for example, a wire. Alternatively, the first charging channel 21 can be provided with other circuit components unrelated to charging voltage and/or charging current conversion. For instance, the battery management circuit 20 includes the first charging channel 21 and a second charging channel. The first charging channel 21 can be provided with a switch component configured to switch between charging channels, which will be described in detail in FIG. 10.

The power supply device 10 is the power supply device with adjustable output voltage mentioned above. However, specific types of the power supply device 10 are not limited in the embodiment of the present disclosure. For example, the power supply device 10 can be a device specially configured to charge such as an adaptor, a power bank, etc., or other devices that are able to provide both power and data service such as a computer.

The battery 30 according the embodiment of the present disclosure includes multiple cells coupled in series (at least two cells). The cells coupled in series can divide the charging voltage provided by the power supply device 10 in the charging process. As illustrated in FIG. 1, a first cell 31a and a second cell 31b can be any two of the multiple cells or any two groups of the multiple cells. Exemplarily, when the first cell 31a (or the second cell 31b) includes a group of cells, all cells in this cell-group can be coupled in series or in parallel. Specific coupling manners of the cells are not limited herein.

The battery 30 can be one battery or multiple batteries. That is to say, the cells coupled in series according to the embodiment of the present disclosure can be packaged into one battery pack to form one battery or be packaged into multiple battery packs to form multiple batteries. For instance, the battery 30 can be one battery. The one battery includes the first cell 31a and the second cell 31b coupled in series. For another instance, the battery 30 can include two batteries. One of the two batteries includes the first cell 31a, and the other one of the two batteries includes the second cell 31b.

When the power supply device 10 charges the battery 30 through the first charging channel 21, the communication circuit 23 communicates with the power supply device 10, so as to make magnitude of the charging voltage and/or charging current received from the power supply device 10 match a current charging stage of the battery 30, or make magnitude of the charging voltage and/or charging current received from the power supply device 10 meet requirements on the charging voltage and/or charging current in the current charging stage of the battery 30.

As mentioned above, the first charging channel 21 is a direct charging channel and applies directly the charging voltage and/or charging current received from the power supply device 10 to the battery 30. In order to achieve direct charging, the embodiment of the present disclosure introduce in the battery management circuit 20 a control circuit with communication function, that is, the communication circuit 23. The communication circuit 23 can keep communicating with the power supply device 10 in a direct charging process to form a closedloop feedback mechanism, so as to enable the power supply device 10 to acquire the state information of the battery in real time, thus adjusting continuously the charging voltage and/or charging current flowing into the first charging channel to guarantee that magnitude of the charging voltage and/or charging current received from the power supply device 10 matches the current charging stage of the battery 30.

The current charging stage of the battery 30 can be any one of the trickle charging stage, the constant-current charging stage, and the constant-voltage charging stage.

In the trickle charging stage of the battery 30, the communication circuit 23 can communicate with the power supply device 10, so that the power supply device 10 can adjust charging current provided for the first charging channel 21, to make the charging current match charging current corresponding to the trickle charging stage, or make the charging current to meet requirements on charging current in the trickle charging stage of the battery 30.

In the constant-voltage charging stage of the battery 30, the communication circuit 23 can communicate with the power supply device 10, so that the power supply device 10 can adjust charging voltage provided for the first charging channel 21, to make the charging voltage match charging voltage corresponding to the constant-voltage charging stage, or make the charging voltage meet requirements on charging voltage in the constant-voltage charging stage of the battery 30.

In the constant-current charging stage of the battery 30, the communication circuit 23 can communicate with the power supply device 10, so that the power supply device 10 can adjust charging current provided for the first charging channel 21, to make the charging current match charging current corresponding to the constant-current charging stage, or make the charging current meet requirements on charging current in the constant-current charging stage of the battery 30.

In embodiments of the present disclosure, communication content and communication methods between the communication circuit 23 and the power supply device 10 are not limited. The above aspects will be described in detail hereinafter in conjunction with specific embodiments and will not be repeated herein.

The battery management circuit 20 further includes an equalization circuit 22. The equalization circuit 22 is coupled with the first cell 31a and the second cell 31b to equalize the voltage of the first cell 31a and the voltage of the second cell 31b.

The battery management circuit 20 according to the embodiment of the present disclosure can conduct direct charging on the battery. In other words, the battery management circuit 20 according to the embodiment of the present disclosure is a battery management circuit that supports a direct charging architecture. In the direct charging architecture, the direct charging channel does not need to be provided with a conversion circuit, which in turn reduces heating of the device to be charged in the charging process.

Direct charging scheme can reduce heating of the device to be charged in the charging process to some extent. However, when charging current received from the power supply device 10 is excessive, such as an output current of the power supply device 10 reaching a magnitude between 5A and 10A, heating of the battery management circuit 20 is still serious, and thus safety problems may occur.

In order to guarantee charging speed and further reduce heating of the device to be charged in the charging process, structure of the battery is modified in the embodiment of the present disclosure. A battery with cells coupled in series is provided. Compared with a battery with one single cell, to achieve an equal charging speed, charging current of the battery with cells coupled in series is 1/N time the magnitude of charging current of a battery with one single cell, where N represents the number of cells coupled in series of the device to be charged. That is to say, as to an equal charging speed, the embodiment of the present disclosure can significantly reduce magnitude of charging current, thereby further reducing heating of the device to be charged in the charging process.

For example, as to a single-cell battery of 3000mAh, a charging current of 9A (ampere) is needed to reach a charging speed of 3C (Coulomb). In order to reach an equal charging speed and reduce heating of the device to be charged in the charging process at the same time, two cells, each of 1500mAh, can be coupled in series to replace the single cell of 3000mAh. As a result, only a charging current of 4.5A is needed to reach the charging speed of 3C. In addition, compared with the charging current of 9A, the charging current of 4.5 A produces significantly less heat than the charging current of 9A.

Furthermore, the power management circuit in the embodiment of the present disclosure can equalize voltage between cells coupled in series and make parameters of the cells coupled in series be approximate, so as to facilitate unified management of cells of the battery. Moreover, in case that the battery includes multiple cells, keeping parameters between the cells consistent can improve overall performance and service life of the battery.

It should be noted that, since the first charging channel 21 adopts a direct charging manner to charge the battery 30 with multiple cells coupled in series, charging voltage received from the power supply device 10 needs to be higher than total voltage of the battery 30. In general, working voltage of a single cell is between 3.0V and 4.35 V. In case of double cells coupled in series, when the first charging channel 21 is adopted in the charging process, output voltage of the power supply device 10 can be set equal to or higher than 10 V.

The equalization circuit 22 can be implemented in various manners. The embodiment of the disclosure provides an equalization circuit based on an RLC series circuit. The following will describe in detail the equalization circuit based on an RLC series circuit in conjunction with FIG. 2 to FIG. 9.

As illustrated in FIG. 2, the equalization circuit 22 includes an RLC series circuit 25, a switch circuit 26, and a control circuit 27. The switch circuit 26 has one end coupled with the first cell 31a and the second cell 31b and another end coupled with the RLC series circuit 25. The switch circuit 26 has a control end coupled with the control circuit 27.

The control circuit 27 is configured to control the switch circuit 26 to make the first cell 31a and the second cell 31b alternately form a closed loop with the RLC series circuit 25 to provide input voltage for the RLC series circuit 25, when the voltage of the first cell 31a and the voltage of the second cell 31b are nonequalized. In other words, the control circuit 27 controls the switch circuit 26 to make the first cell 31a and the second cell 31b alternately be a voltage source of the RLC series circuit 25 to provide input voltage for the RLC series circuit 25.

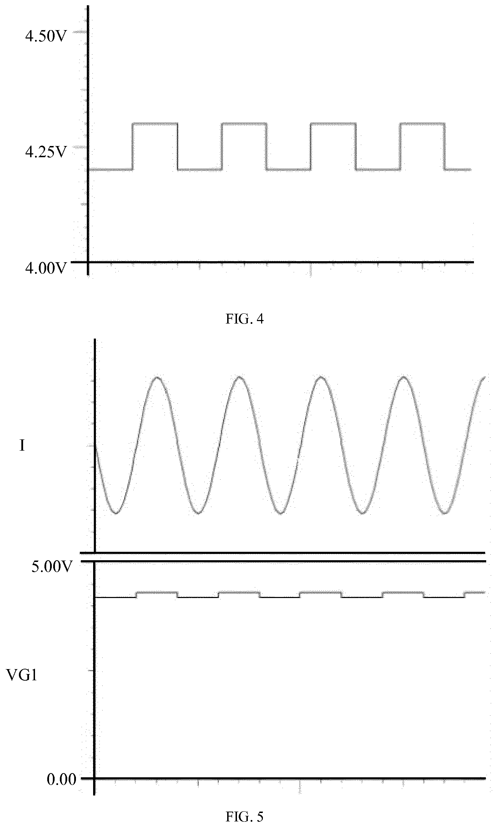

When the control circuit 27 couples alternately the first cell 31a and the second cell 31b with the RLC series circuit 25 via the switch circuit 26, an equivalent circuit diagram of FIG. 3 can be obtained. As illustrated in FIG. 3, VG1 represents an equivalent power supply of the RLC series circuit 25 formed by the first cell 31a and the second cell 31b being alternately coupled with the RLC series circuit 25. For example, the voltage of the first cell 31a is 4.3V and the voltage of the second cell 31b is 4.2V. A voltage waveform of VG1 is illustrated in FIG. 4. The input voltage can be divided into a DC component of a 4.25V voltage and an AC component of a 4.25V voltage. $V_{pp}$ of the AC component (difference between a minimum value of the AC component and a maximum value of the AC component) is 0.5 V.

Still take the voltage of the first cell 31a being 4.3V and the voltage of the second cell 31b being 4.2V as an example. FIG. 5 is a diagram illustrating correspondence between a waveform of Current I in the RLC series circuit 25 and a voltage waveform of VG1 of the RLC series circuit. It should be understood that, the specific value of I depends on overall impedance of the RLC series circuit 25 and is not limited in the embodiment of the disclosure.

When the voltage of VG1 is 4.3V, it means that the first cell 31a is coupled with the RLC series circuit 25; when input voltage of VG1 is 4.2V, it means that the second cell 31b is coupled with the RLC series circuit 25. By comparing the waveform of Current I in the RLC series circuit 25 and the voltage waveform of VG1 of the RLC series circuit 25, it can be seen that when the second cell 31b is coupled with the RLC series circuit 25, current in the RLC series circuit 25 is a negative current, that is, the current flows from the outside to the second cell 31b to charge the second cell 31b, so as to equalize the voltage of the first cell 31a and the voltage of the second cell 31b.

The equalization circuit in the embodiment of the disclosure is an equalization circuit based on an RLC series circuit. The equalization circuit has a simple circuit structure and is able to reduce complexity of a battery management circuit. In addition, the number of components of the RLC series circuit is small and total impedance of the RLC series circuit is low. Therefore, heating is low during working of the equalization circuit.

As pointed above, when the control circuit 27 couples alternately the first cell 31a and the second cell 31b with the RLC series circuit 25, the waveform of the current I in the RLC series circuit 25 is illustrated in FIG. 5. When the impedance of the RLC series circuit 25 is excessively high, magnitude of the current I is low, and an equalization process between the voltage of the first cell 31a and the voltage of the second cell 31b is slow.

The RLC series circuit 25 has a resonant characteristic. The magnitude of the current I in the RLC series circuit 25 depends on voltage frequency of VG1 (that is, the frequency of the input voltage of the RLC series circuit 25). The more the voltage frequency of VG1 approximates to resonant frequency of the RLC series circuit 25, the higher the current in the RLC series circuit 25 is.

Therefore, in order to improve efficiency in energy transfer of the equalization circuit, the control circuit 27 can control the switch circuit 26, to make frequency of the input voltage of the RLC series circuit 25 approximate to the resonant frequency of the RLC series circuit 25, which can significantly improve efficiency in energy transfer between the first cell 31a and the second cell 31b. When the frequency of the input voltage of the RLC series circuit 25 reaches the resonant frequency of the RLC series circuit 25, that is, the frequency of the input voltage of the RLC series circuit 25 reaches

$$f = 1/2\pi\sqrt{LC}$$

, where L represents self-inductance coefficient of Inductor L and C represents capacitance of Capacitor C, the RLC series circuit 25 goes into a resonant state. When the RLC series circuit 25 is in a resonant state, Inductor L and Capacitor C have voltages which are equal in magnitude and opposite in phase, and thus the voltages can cancel each other out, which makes Inductor L and Capacitor C form a short circuit (Inductor L and Capacitor C are equivalent to a wire). The RLC series circuit 25 becomes a pure resistance circuit, magnitude of the current I in the RLC series circuit 25 reaches a maximum value, and efficiency in energy transfer in the equalization circuit 22 reaches the highest level.

The specific configuration of the switch circuit 26 is not limited herein, as long as the first cell 31a and the second cell 31b can be alternately coupled with the RLC series circuit 25 through on-off of a switch component(s) of the switch circuit 26. The following will provide several alternative implementations of the switch circuit 26.

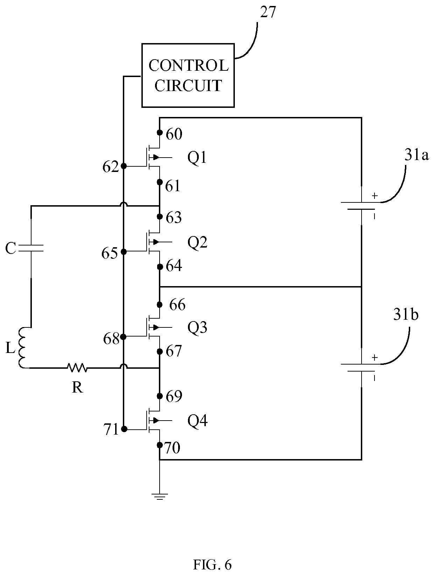

FIG. 6 illustrates an alternative implementation of the switch circuit. As illustrated in FIG. 6, the switch circuit includes a first switch transistor Q1, a second switch transistor Q2, a third switch transistor Q3, and a fourth switch transistor Q4. The first switch transistor Q1 has a first connected end 60 coupled with a positive electrode of the first cell 31a and a second connected end 61 coupled with a first connected end 63 of the second switch transistor Q2. The second switch transistor Q2 has a second connected end 64 coupled with a first connected end 66 of the third switch transistor Q3 and a negative electrode of the first cell 31a. The third switch transistor Q3 has a second connected end 67 coupled with a first connected end 69 of the fourth switch transistor Q4. The fourth switch transistor Q4 has a second connected end 70 coupled with a negative electrode of the second cell 31b. The second cell 31b has a positive electrode coupled with a negative electrode of the first cell 31a. The first switch transistor Q1 has a control end 62 coupled with the control circuit 27. The second switch transistor Q2 has a control end 65 coupled with the control circuit 27. The third switch transistor Q3 has a control end 68 coupled with the control circuit 27. The fourth switch transistor Q4 has a control end 71 coupled with the control circuit 27. Components of the RLC series circuit (including a capacitor C, an inductor L, and a resistor R illustrated in FIG. 6) are coupled in series between the second connected end 61 of the first switch transistor Q1 and the second connected end 67 of the third switch transistor Q3.

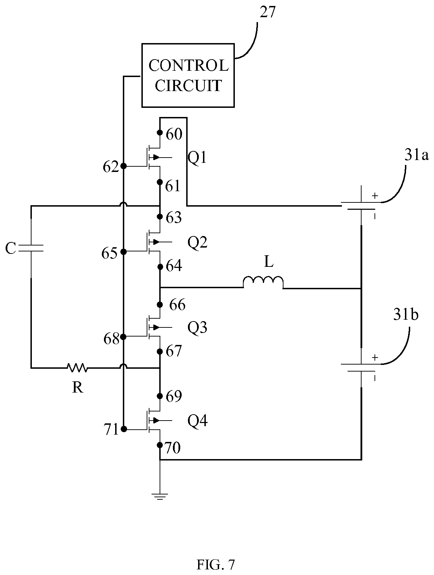

FIG. 7 illustrates another alternative implementation of the switch circuit. As illustrated in FIG. 7, the switch circuit includes a first switch transistor Q1, a second switch transistor Q2, a third switch transistor Q3, and a fourth switch transistor Q4. The first switch transistor Q1 has a first connected end 60 coupled with a positive electrode of the first cell 31a and a second connected end 61 coupled with a first connected end 63 of the second switch transistor Q2. The second switch transistor Q2 has a second connected end 64 coupled with a first connected end 66 of the third switch transistor Q3. The third switch transistor Q3 has a second connected end 67 coupled with a first connected end 69 of the fourth switch transistor Q4. The fourth switch transistor Q4 has a second connected end 70 coupled with a negative electrode of the second cell 31b. The second cell 31b has a positive electrode coupled with a negative electrode of the first cell 31a. The first switch transistor Q1 has a control end 62 coupled with the control circuit 27. The second switch transistor Q2 has a control end 65 coupled with the control circuit 27. The third switch transistor Q3 has a control end 68 coupled with the control circuit 27. The fourth switch transistor Q4 has a control end 71 coupled with the control circuit 27. At least part of components of the RLC series circuit are coupled in series between the second connected end 64 of the second switch transistor Q2 and the negative electrode of the first cell 31a, and components of the RLC series circuit, other than the above mentioned at least part of components of the RLC series circuit coupled in series between the second connected end 64 of the second switch transistor Q2 and the negative electrode of the first cell 31a, are coupled in series between the second connected end 61 of the first switch transistor Q1 and the second connected end 67 of the third switch transistor Q3.

The at least part of components of the RLC series circuit mentioned above can be at least one of Capacitor C, Inductor L, and Resistor R. For instance, the at least part of components of the RLC series circuit mentioned above can be Inductor L, and the components other than the at least part of components of the RLC series circuit, can be Capacitor C and Resistor R. For another instance. Still another example, the at least part of components of the RLC series circuit mentioned above can be Inductor L and Capacitor C, and the components of the RLC series circuit, other than the at least part of components of the RLC series circuit, can be Resistor R. For yet another instance, the at least part of components of the RLC series circuit mentioned above can be Resistor R, Capacitor C, and Inductor L, and there is no other components except the at least part of components of the RLC series circuit. In this case, the second connected end 61 of the first switch transistor Q1 can be coupled with the second connected end 67 of the third switch transistor Q3 directly through wires.

The switch transistor mentioned above can be, for example, an MOS (metal oxide semiconductor) transistor. In addition, the connected end of the switch transistor mentioned above can be a source electrode and/or a drain electrode of the switch transistor. The control end of the switch transistor can be a grid electrode of the switch transistor.

Based on the equalization circuit illustrated in FIG. 6 and FIG. 7, the following will describe alternative control manners of the control circuit 27.

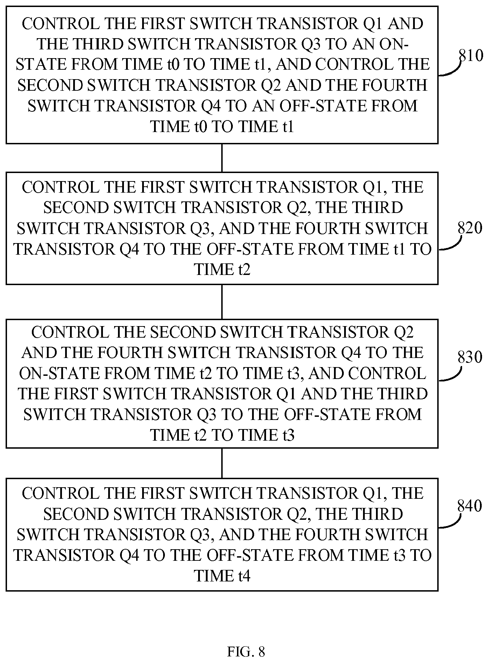

FIG. 8 is a flowchart illustrating a control method according to an embodiment of the present disclosure. FIG. 8 describes a situation where the voltage of the first cell 31a and the voltage of the second cell 31b are nonequalized and the voltage of the first cell 31a is higher than the voltage of the second cell 31b. The control method illustrated in FIG.8 includes operations at block 810 to block 840. The following will describe the method in detail.

At block 810, control the first switch transistor Q1 and the third switch transistor Q3 to an on-state from time t0 to time t1 and control the second switch transistor Q2 and the fourth switch transistor Q4 to an off-state from time t0 to time t1, where time t0 represents a start time of a work period of the control circuit 27 (that is, time 0 of the work period).

It can be seen from FIG. 6 or FIG. 7 that, when the first switch transistor Q1 and the third switch transistor Q3 are in the on-state and the second switch transistor Q2 and the fourth switch transistor Q4 are in the off-state, the first cell 31a, the capacitor C, the inductor L, and the resistor R form a closed circuit, and the first cell 31a provides input voltage for the RLC series circuit.

At block 820, control the first switch transistor Q1, the second switch transistor Q2, the third switch transistor Q3, and the fourth switch transistor Q4 to the off-state from time t1 to time t2, where a time period from time t1 to time t2 represents a preset first dead time.

A dead time can be understood as a protection time, which aims to avoid the first switch transistor Q1 and the third switch transistor Q3 being simultaneously in the on-state with the second switch transistor Q2 and the fourth switch transistor Q4 and thus resulting in circuit fault.

At block 830, control the second switch transistor Q2 and the fourth switch transistor Q4 to the on-state from time t2 to time t3 and control the first switch transistor Q1 and the third switch transistor Q3 to the off-state from time t2 to time t3.

It can be seen from FIG. 6 or FIG. 7 that, when the second switch transistor Q2 and the fourth switch transistor Q4 are in the on-state and the first switch transistor Q1 and the third switch transistor Q3 are in the off-state, the second cell 31b, Capacitor C, Inductor L, and Resistor R form a closed circuit, and the second cell 31b provides input voltage for the RLC series circuit.

In some embodiments, value of t3-t2 can be equal to value of t1 - t0, that is, a time period of the second switch transistor Q2 and the fourth switch transistor Q4 being in the on-state can be equal to a time period of the first switch transistor Q1 and the third switch transistor Q3 being in the on-state.

At block 840, control the first switch transistor Q1, the second switch transistor Q2, the third switch transistor Q3, and the fourth switch transistor Q4 to the off-state from time t3 to time t4, where t4 represents an end time of the work period and a time period from time t3 to time t4 represents a preset second dead time.

In some embodiments, the second dead time can be equal to the first dead time.

In addition, in some embodiments, by setting reasonably value of t1-t4, work frequency of the control circuit 27 can be made to be equal to the resonant frequency of the RLC series circuit, which can make frequency of the input voltage of the RLC series circuit be equal to the resonant frequency of the RLC series circuit, thereby prompting the RLC series circuit to reach the resonant state.

It should be understood that, FIG. 8 illustrates a control time sequence of the control circuit 27 in any work period. Control time sequences of other work periods are similar and will not be repeated herein.

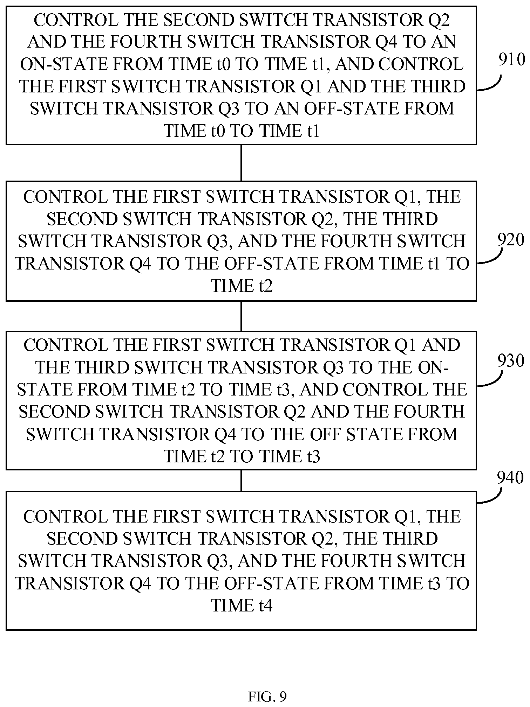

FIG. 9 is a flowchart illustrating a control method according to another embodiment of the present disclosure. FIG. 9 describes a situation where the voltage of the first cell 31a and the voltage of the second cell 31b are nonequalized and the voltage of the second cell 31b is higher than the voltage of the first cell 31a. The control method of FIG.9 is similar to that of FIG.8, and the difference lies in that in FIG.9, the on and off order of the first switch transistor Q1 and the third switch transistor Q3 are exchanged with that of the second switch transistor Q2 and the fourth switch transistor Q4. The control method illustrated in FIG.9 includes operations at block 910 to block 940. The following will describe the method in detail.

At block 910, control the second switch transistor Q2 and the fourth switch transistor Q4 to an on-state from time t0 to time t1 and control the first switch transistor Q1 and the third switch transistor Q3 to an off-state from time t0 to time t1, where time t0 represents a start time of a work period of the control circuit 27.

It can be seen from FIG. 6 or FIG. 7 that, when the second switch transistor Q2 and the fourth switch transistor Q4 are in the on-state and the first switch transistor Q1 and the third switch transistor Q3 are in the off-state, the second cell 31b, the capacitor C, the inductor L, and the resistor R form a closed circuit, and the second cell 31b provides input voltage for the RLC series circuit.

At block 920, control the first switch transistor Q1, the second switch transistor Q2, the third switch transistor Q3, and the fourth switch transistor Q4 to the off-state from time t1 to time t2, where a time period from time t1 to time t2 represents a preset first dead time.

At block 930, control the first switch transistor Q1 and the third switch transistor Q3 to the on-state from time t2 to time t3 and control the second switch transistor Q2 and the fourth switch transistor Q4 to the off-state from time t2 to time t3.

It can be seen from to FIG. 6 or FIG. 7 that, when the first switch transistor Q1 and the third switch transistor Q3 are in the on-state and the second switch transistor Q2 and the fourth switch transistor Q4 are in the off-state, the first cell 31a, Capacitor C, Inductor L, and Resistor R form a closed circuit, and the first cell 31a provides input voltage for the RLC series circuit.

In some embodiments, value of t3-t2 can be equal to value of t1-t0, that is, a time period of the second switch transistor Q2 and the fourth switch transistor Q4 being in the on-state can be equal to a time period of the first switch transistor Q1 and the third switch transistor Q3 being in the on-state.

At block 940, control the first switch transistor Q1, the second switch transistor Q2, the third switch transistor Q3, and the fourth switch transistor Q4 to the off-state from time t3 to time t4, where t4 represents an end time of the work period and a time period from time t3 to time t4 represents a preset second dead time.

In some embodiments, the second dead time can be equal to the first dead time.

In addition, in some embodiments, by setting reasonably value of t1 -t4, work frequency of the control circuit 27 can be made to be equal to the resonant frequency of the RLC series circuit, which can make frequency of the input voltage of the RLC series circuit be equal to the resonant frequency of the RLC series circuit, thereby prompting the RLC series circuit to reach the resonant state.

It should be understood that, FIG. 9 illustrates a control time sequence of the control circuit 27 in any work period. Control time sequences of other work periods are similar and will not be repeated herein.

Alternatively, in some embodiments, as illustrated in FIG. 10, the battery management circuit 20 can further include a second charging channel 24. The second charging channel 24 is provided with a step-up circuit 25. When the power supply device 10 charges the battery 30 through the second charging channel 24, the step-up circuit 25 is configured to receive initial voltage from the power supply device 10 and boost the initial voltage to a target voltage to charge the battery 30 according to the target voltage. The initial voltage is lower than total voltage of the battery 30 and the target voltage is higher than the total voltage of the battery 30. In addition, as illustrated in FIG. 10, in some embodiments, the battery management circuit 20 can further include a second control circuit 28. The second control circuit 28 can be configured to control switch between the first charging channel 21 and the second charging channel 24.

It can be understood from above that, the first charging channel 21 conducts direct charging on cells of the battery 30, and direct charging requires that charging voltage received from the power supply device 10 be higher than total voltage of cells coupled in series of the battery. For example, as to two cells coupled in series, suppose current voltage of each cell is 4V, when the first charging channel 21 is utilized to charge the two cells, the charging voltage received from the power supply device 10 is required to be at least higher than 8V. However, output voltage of a conventional power supply device is usually unable to reach 8V (for example, a conventional adaptor usually provides an output voltage of 5V), which results in the conventional power supply device being unable to charge the battery 30 through the first charging channel 21. In order to make the above direct charging circuit be compatible with the conventional power supply device, such as a conventional power adaptor, the second charging channel 24 is provided herein. The second charging channel 24 is provided with a step-up circuit 25, and the step-up circuit 25 is configured to boost the initial voltage provided by the power supply device 10 to a target voltage to make the target voltage be higher than the total voltage of the battery 30, so as to solve the problem of the conventional power supply device being unable to charge the battery 30 with multiple cells coupled in series according to the embodiment of the disclosure.

The specific configuration of the step-up circuit 25 of the embodiment of the disclosure is not limited. For instance, a Boost circuit or a charge pump can be adopted to boost voltage. Alternatively, in some embodiments, the second charging channel 24 can adopt a conventional charging channel design, that is, the second charging channel 24 can be provided with a conversion circuit, such as a charging IC. The conversion circuit can take constant-voltage and constant-current control of the charging process of the battery 30 and adjust (such as boost or buck) the initial voltage received from the power supply device 10 according to actual needs. In the embodiment of the disclosure, the initial voltage received from the power supply device 10 can be boosted to the target voltage by utilizing a step-up function of the conversion circuit.

The communication circuit 23 can achieve switch between the first charging channel 21 and the second charging channel 24 through a switch component. Specifically, as illustrated in FIG. 10, the first charging channel 21 is provided with a switch transistor Q5. When the communication circuit 23 controls the switch transistor Q5 to switch-on, the first charging channel 21 works and direct charging is conducted on the battery 30 through the first charging channel 21. When the communication circuit 23 controls the switch transistor Q5 to switch-off, the second charging channel 24 works and charging is conducted on the battery 30 through the second charging channel 24.

A device to be charged is provided. As illustrated in FIG. 11, the device to be charged 40 includes the battery management circuit 20 and the battery 30 described above.

At present, a single-cell power supply scheme is generally adopted for charging in a device to be charged (such as a terminal). Multiple cells coupled in series are proposed in embodiments of the disclosure. Total voltage of the multiple cells is high and is therefore unsuitable to be used directly to supply power to the device to be charged. In order to solve this problem, a practical scheme is to adjust working voltage of the system of the device to be charged, so as to enable the system of the device to be charged to support power supply of multiple cells at the same time. However, this scheme results in too many modifications to the device to be charged and high cost.

Alternatively, in some examples not covered by the appended claims, the device to be charged 40 can be provided with a step-down circuit, so as to make reduced voltage meet requirements of the device to be charged 40 on power supply voltage.

For example, working voltage of a single cell is 3.0V to 4.35 V. In order to guarantee normal power supply voltage of the system of the device to be charged, the step-down circuit can reduce the total voltage of the battery 30 to a value between 3.0V and 4.35V. The step-down circuit can be implemented in various manners, such as a Buck circuit, a charge pump, etc., to reduce voltage.

Alternatively, in other embodiments, a power supply circuit of the device to be charged 40 has an input end that can be coupled with both ends of any one single cell of the battery 30. The power supply circuit can supply power to the system of the device to be charged 40 according to voltage of the one single cell.

It should be understood that, voltage reduced by the step-down circuit may have ripples and in turn influence power supply quality of the device to be charged. The invention adopts one single cell to supply power to the system of the device to be charged, due to steady voltage output by one single cell. Therefore, while a problem of how to supply power based on a multiple-cell scheme is solved, power supply quality of the system of the device to be charged can be guaranteed.

When one single cell is adopted to supply power, nonequalization of voltage between different cells of the battery 30 may occur. The nonequalization of voltage between different cells can cause difficulty in battery management. In addition, difference in parameters of cells of the battery can result in decrease in service life of the battery. In the embodiment of the disclosure, the equalization circuit 22 is used to equalize voltage between cells, thereby keeping voltage between the cells of the battery 30 equalized even if the above single-cell power supply scheme is adopted.

With output power of the power supply device increasing, when the power supply device charges the cells of the device to be charged, lithium precipitation may occur, which deceases service life of the cells.

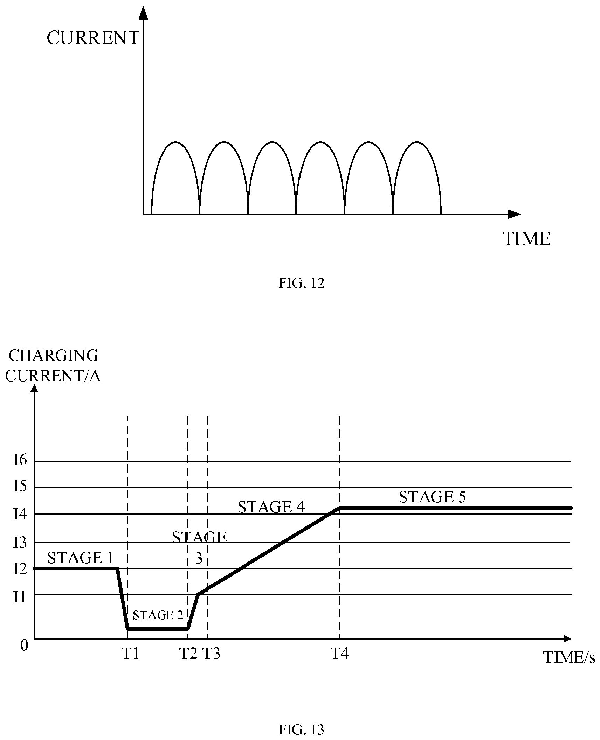

In order to improve reliability and safety of the cells, the power supply device 10 is controlled to output a pulsating DC current (also referred to as a oneway pulsating output current, a pulsating waveform current, or a steamed bun-wave current). Since the first charging channel 21 adopts the direct charging manner to charge the battery 30, the pulsating DC current received from the power supply device 10 is applied directly to the battery 30. As illustrated in FIG. 12, magnitude of the pulsating DC current varies periodically. Compared with a constant DC current, the pulsating DC current can reduce lithium precipitation of a cell, thereby increasing service life of the cell. In addition, compared with the constant DC current, the pulsating DC current can decrease possibility and intensity in arcing of a contact of a charging interface, thereby increasing service life of the charging interface.

Adjusting charging current output by the power supply device 10 to the pulsating DC current can be implemented in various manners. For example, a primary filtering circuit and a secondary filtering circuit of the power supply device 10 can be removed, so as to make the power supply device 10 output the pulsating DC current.

In an example not falling under the scope of the claims the charging current received from the power supply device 10 by the first charging channel 21 can be an AC current, for example, a primary filtering circuit, a secondary rectifying circuit, and a secondary filtering circuit of the power supply device 10 can be removed to make the power supply device 10 output the AC current. The AC current can also reduce lithium precipitation of the cell and increase the service life of the cell.

In some embodiments, the power supply device 10 is selectively operable in a first charging mode or a second charging mode. Charging speed of the power supply device 10 charging the battery 30 in the second charging mode is faster than that of the power supply device 10 charging the battery 30 in the first charging mode. In other words, compared with the power supply device 10 working in the first charging mode, the power supply device 10 working in the second charging mode takes less time to charge battery of the same capacity. Furthermore, in some embodiments, in the first charging mode, the power supply device 10 charges the battery 30 through the second charging channel 24; in the second charging mode, the power supply device 10 charges the battery 30 through the first charging channel 21.

The first charging mode can be a normal charging mode. The second charging mode can be a fast charging mode. In the normal charging mode, the power supply device outputs lower current (usually lower than 2.5A) or adopts low power (usually lower than 15W) to charge the battery of the device to be charged. In the normal charging mode, charging fully a battery of high capacity (such as a 3000mA battery) usually takes several hours. However, in the fast charging mode, the power supply device can output higher current (usually higher than 2.5A, such as 4.5A, 5A, or even higher) or adopt higher power (usually higher than or equal to 15W) to charge the battery of the device to be charged. Compared with the normal charging mode, in the fast charging mode, the power supply device can charge fully the battery of the same capacity within a significantly shorter charging period and at a higher charging speed.

Moreover, the communication circuit 23 can conduct two-way communication with the power supply device 10, to control output of the power supply device 10 in the second charging mode, that is, to control the charging voltage and/or charging current provided by the power supply device 10 in the second charging mode. The device to be charged 40 can include a charging interface. The communication circuit 23 communicates with the power supply device 10 through a data line of the charging interface. For instance, the charging interface can be a USB interface. The data line can be a D+ line and/or a D- line of the USB interface. Alternatively, the device to be charged 40 can also conduct wireless communication with the power supply device 10.

Communication content between the power supply device 10 and the communication circuit 23 and control manners of the communication circuit 23 on output of the power supply device 10 in the second charging mode are not limited herein. For example, the communication circuit 23 can communicate with the power supply device 10, interact with current total voltage and/or current power of the battery 30 of the device to be charged 40, and adjust output voltage and/or output current of the power supply device 10 according to the current total voltage and/or current power of the battery 30. The following will describe in detail the communication content between the communication circuit 23 and the power supply device 10 and the control manners of the communication circuit 23 on output of the power supply device 10 in the second charging mode in conjunction with a specific embodiment of the disclosure.

Description above does not limit master-slave relationship between the power supply device 10 and the device to be charged (or the communication circuit 23 of the device to be charged). That is to say, any one of the power supply device 10 and the device to be charged can function as a master device to initiate a two-way communication, and correspondingly the other one of the power supply device 10 and the device to be charged can function as a slave device to make a first response or a first reply to the communication initiated by the master device. As a practical manner, identities of the master device and the slave device can be determined by comparing levels of the power supply device 10 and the device to be charged with reference to earth in a communication process.

The specific implementation of the two-way communication between the power supply device 10 and the device to be charged is not limited herein. In other words, any one of the power supply device 10 and the device to be charged can function as the master device to initiate the communication, and correspondingly the other one of the power supply device 10 and the device to be charged can function as the slave device to make the first response or the first reply to the communication initiated by the master device. Besides, the master device can make a second response to the first response or the first reply of the slave device, as such, the master device and the slave device complete a negotiation on charging modes. As a possible implementation, charging between the master device and the slave device can be executed after completion of multiple negotiations on charging modes between the master device and the slave device, so as to guarantee that the charging process is safe and reliable after negotiations.

The master device making the second response to the first response or the first reply to the communication of the slave device can include the following. The master device receives from the slave device the first response or the first reply to the communication and makes the second response to the first response or the first reply of the slave device. As an example, when the master device receives from the slave device the first response or the first reply to the communication within a preset time period, the master device making the second response to the first response or the first reply of the slave device includes the following. The master device and the slave device complete a negotiation on charging modes. Charging between the master device and the slave device is executed in the first charging mode or in the second charging mode according to the negotiation result, that is, the power supply device 10 is operable in the first charging mode or in the second charging mode to charge the device to be charged according to the negotiation.

The master device making the second response to the first response or the first reply to the communication of the slave device can also include the following. When the master device fails to receive from the slave device the first response or the first reply to the communication within a preset time period, the master device can still make the second response to the first response or the first reply made by the slave device. As an example, when the master device fails to receive from the slave device the first response or the first reply to the communication within a preset time period, the master device can still make the second response to the first response or the first reply made by the slave device as follows: the master device and the slave device complete a negotiation on charging modes. Charging is executed in the first charging mode between the master device and the slave device, that is, the power supply device is operable in the first charging mode to charge the device to be charged.

Alternatively, in some embodiments, after the device to be charged, as the main device, initiates the communication and the power supply device 10, as the subordinate device, makes the first response or the first reply to the communication initiated by the main device, without the device to be charged making the second response to the first response or the first reply of the power supply device 10, it can be regarded as the main device and the subordinate device completing a negotiation on charging modes, and thus the power supply device 10 can determine to charge the device to be charged in the first charging mode or in the second charging mode according to the negotiation.

Alternatively, in some embodiments, the communication circuit 23 conducting two-way communication with the power supply device 10, so as to control output of the power supply device 10 in the second charging mode includes the following. The communication circuit 23 conducts two-way communication with the power supply device 10, so as to negotiate charging modes between the power supply device 10 and the device to be charged.

Alternatively, in some embodiments, the communication circuit 23 conducting two-way communication with the power supply device 10 to negotiate charging modes between the power supply device 10 and the device to be charged includes the following. The communication circuit 23 receives a first instruction from the power supply device 10, the first instruction is configured to enquire whether the device to be charged enable (in other words, switches on) the second charging mode; the communication circuit 23 sends a reply instruction of the first instruction to the power supply 10, the reply instruction of the first instruction is configured to indicate whether the device to be charged agrees to enable the second charging mode; in case that the device to be charged agrees to enable the second charging mode, the communication circuit 23 controls the power supply device 10 to charge the battery 30 though the first charging channel 21.

Alternatively, in some embodiments, the communication circuit 23 conducting two-way communication with the power supply device 10 to control output of the power supply device 10 in the second charging mode includes the following. The communication circuit 23 conducts two-way communication with the power supply device 10, so as to determine charging voltage which is output by the power supply device in the second charging mode and configured to charge the device to be charged.

Alternatively, in some embodiments, the communication circuit 23 conducting two-way communication with the power supply device 10, so as to determine charging voltage which is output by the power supply device in the second charging mode and configured to charge the device to be charged includes the following.

The communication circuit 23 receives a second instruction from the power supply device 10, the second instruction is configured to enquire whether the charging voltage output by the power supply device 10 matches current total voltage of the battery 30 of the device to be charged; the communication circuit 23 sends a reply instruction of the second instruction to the power supply 10, the reply instruction of the second instruction is configured to indicate that the voltage output by the power supply device 10 matches the current total voltage of the battery 30 or does not match, that is, is at higher voltage levels, or is at lower voltage levels. Alternatively, the second instruction can be configured to enquire whether it is suitable to use current output-voltage of the power supply device 10 as the charging voltage, which is output by the power supply device 10 in the second charging mode and configured to charge the device to be charged. The reply instruction of the second instruction is configured to indicate whether the current output-voltage of the power supply device 10 is suitable or unsuitable, that is, at higher voltage levels or at lower voltage levels. The current output-voltage of the power supply device 10 matching the current total voltage of the battery 30, or the current output-voltage of the power supply device 10 being suitable to be used as the charging voltage which is output by the power supply device 10 in the second charging mode and configured to charge the device to be charged can be understood as follows. The current output-voltage of the power supply device 10 is slightly higher than the current total voltage of the battery, and the difference between the output-voltage of the power supply device 10 and the current total voltage of the battery is within a preset range (usually at a level of several hundred millivolts (mV)).

Alternatively, in some embodiments, the communication circuit 23 conducting two-way communication with the power supply device 10, so as to control output of the power supply device 10 in the second charging mode can include the following. The communication circuit 23 conducts two-way communication with the power supply device 10, so as to determine charging current which is output by the power supply device 10 in the second charging mode and configured to charge the device to be charged.

Alternatively, in some embodiments, the communication circuit 23 conducting two-way communication with the power supply device 10 to determine charging current which is output by the power supply device 10 in the second charging mode and configured to charge the device to be charged can include the following. The communication circuit 23 receives a third instruction sent by the power supply device 10, the third instruction is configured to enquire a maximum charging current the device to be charged supports; the communication circuit 23 sends a reply instruction of the third instruction to the power supply device 10, the reply instruction of the third instruction is configured to indicate the maximum charging current the device to be charged supports, so that the power supply device 10 can determine the charging current which is output by the power supply device 10 in the second charging mode and configured to charge the device to be charged, according to the maximum charging current the device to be charged supports. It should be understood that, the communication circuit 23 determining the charging current which is output by the power supply device 10 in the second charging mode and configured to charge the device to be charged according to the maximum charging current the device to be charged supports can be implemented in various manners. For example, the power supply device 10 can determine the maximum charging current the device to be charged supports as the charging current which is output by the power supply device 10 in the second charging mode and configured to charge the device to be charged, or comprehensively take into account the maximum charging current the device to be charged supports and other factors such as current output capability of the power supply device 10 itself to determine the charging current which is output by the power supply device 10 in the second charging mode and configured to charge the device to be charged.

Alternatively, in some embodiments, the communication circuit 23 conducting two-way communication with the power supply device 10 to control output of the power supply device 10 in the second charging mode includes the following. The communication circuit 23 conducts two-way communication with the power supply device 10 to adjust output-current of the power supply device 10 in the second charging mode.

Specifically, the communication circuit 23 conducting two-way communication with the power supply device 10 to adjust the output-current of the power supply device 10 includes the following. The communication circuit 23 receives a fourth instruction from the power supply device 10, the fourth instruction is configured to enquire current total voltage of the battery; the communication circuit 23 sends a reply instruction of the fourth instruction to the power supply device 10, the reply instruction of the fourth instruction is configured to indicate the current total voltage of the battery, so that the power supply device 10 can adjust the output-current of the power supply device 10 according to the current total voltage of the battery.

Alternatively, in some embodiments, the communication circuit 23 conducting two-way communication with the power supply device 10, so as to control output of the power supply device 10 in the second charging mode includes the following. The communication circuit 23 conducts two-way communication with the power supply device 10 to determine whether there is contact failure in a charging interface.

Specifically, the communication circuit 23 conducting two-way communication with the power supply device 10 to determine whether there is contact failure in the charging interface can include the following. The communication circuit 23 receives a fourth instruction sent by the power supply device 10, the fourth instruction is configured to enquire current voltage of the battery of the device to be charged; the communication circuit 23 sends a reply instruction of the fourth instruction to the power supply device 10, the reply instruction of the fourth instruction is configured to indicate the current voltage of the battery of the device to be charged, so that the power supply device 10 can determine whether there is contact failure in the charging interface according to output voltage of the power supply 10 and the current voltage of the battery of the device to be charged. For instance, in case that the power supply device 10 determines that difference between the output voltage of the power supply 10 and the current voltage of the battery of the device to be charged is greater than a preset voltage threshold value, it indicates that impedance, which is obtained by the difference (that is, the difference between the output voltage of the power supply 10 and the current voltage of the battery of the device to be charged) divided by output-current of the power supply device 10, is greater than a preset impedance threshold value, it can be determined that there is contact failure in the charging interface.

Alternatively, in some embodiments, contact failure in the charging interface can be determined by the device to be charged. For example, the communication circuit 23 sends a sixth instruction to the power supply device 10, the sixth instruction is configured to enquire output-voltage of the power supply device 10; the communication circuit 23 receives a reply instruction of the sixth instruction from the power supply device 10, the reply instruction of the sixth instruction is configured to indicate the output-voltage of the power supply device 10, the communication circuit 23 determines whether there is contact failure in the charging interface according to current voltage of the battery and the output-voltage of the power supply 10. When the communication circuit 23 determines that there is contact failure in the charging interface, the communication circuit 23 can send a fifth instruction to the power supply device 10, the fifth instruction is configured to indicate contact failure in the charging interface. After receiving the fifth instruction, the power supply device 10 can exit the second charging mode.

The following will describe in detail a communication process between the power supply device 10 and the device to be charged 40 (the communication circuit 23 of the device to be charged 40, to be specific) in conjunction with FIG. 13. It should be noted that, the example of FIG. 13 is just for those skilled in the art to understand the embodiments of the disclosure, instead of limiting the embodiments of the disclosure to specific numeric values or specific situations of the example. Those skilled in the art can conduct various modifications and equivalent arrangements without departing from the scope of the embodiment of the disclosure.

As illustrated in FIG. 13, the communication procedure between the power supply device 10 and the device to be charged 40 (also referred to as the communication procedure of a fast charging process) can include the following five stages.

Stage 1:

After the device to be charged 40 is coupled with the power supply device 10, the device to be charged 40 can detect the type of the power supply device 10 though data line D+ and data line D-. When the power supply device 10 is detected to be a power supply device specially configured to charge such as an adaptor, current absorbed by the device to be charged 40 can be higher than a preset current threshold value I2 (can be 1A, for example). When the power supply device 10 detects that output-current of the power supply device 10 is greater than or equal to I2 within a preset duration (can be a continuous time period T1, for example), the power supply device 10 can consider that identification of the type of the power supply device by the device to be charged 40 is completed. Next, the power supply device 10 begins a negotiation process with the device to be charged 40 and send Instruction 1 (corresponding to the first instruction mentioned above), so as to enquire whether the device to be charged 40 agrees that the power supply device 10 charges the device to be charged 40 in the second charging mode.

When the power supply device 10 receives a reply instruction of Instruction 1 and the reply instruction of Instruction 1 indicates that the device to be charged 40 disagrees that the power supply device 10 charges the device to be charged 40 in the second charging mode, the power supply device 10 detects once again the output-current of the power supply device 10. When the output-current of the power supply device 10 is still greater than or equal to I2 within a preset continuous duration (can be a continuous time period T1), the power supply device 10 sends once again Instruction 1 to enquire whether the device to be charged 40 agrees that the power supply device 10 charges the device to be charged 40 in the second charging mode. The power supply device 10 repeats the above operations in Stage 1 until the device to be charged 40 agrees that the power supply device 10 charges the device to be charged 40 in the second charging mode, or the output-current of the power supply device 10 is no longer greater than or equal to I2.

When the device to be charged 40 agrees that the power supply device 10 charges the device to be charged 40 in the second charging mode, the communication procedure proceeds to Stage 2.

Stage 2:

The output voltage of the power supply device 10 can include multiple grades. The power supply device 10 sends Instruction 2 (corresponding to the second instruction mentioned above) to enquire whether the output voltage of the power supply device 10 (current output-voltage) matches current voltage of the battery 30 of the device to be charged 40.

The device to be charged 40 sends a reply instruction of Instruction 2 to indicate whether the output voltage of the power supply device 10 matches the current voltage of the battery 30 of the device to be charged 40 or does not match, that is, is at higher levels, or is at lower levels. When the reply instruction of Instruction 2 indicates that the output voltage of the power supply device 10 is at higher levels or is at lower levels, the power supply device 10 can adjust the output voltage of the power supply device 10 by one grade and send once again Instruction 2 to the device to be charged 40 to enquire whether the output voltage of the power supply device 10 matches the current voltage of the battery. Repeat the above operations until the device to be charged 40 determines that the output voltage of the power supply device 10 matches the current voltage of the battery 30 of the device to be charged 40. and proceed to Stage 3.

Stage 3:

The power supply device 10 sends Instruction 3 (corresponding to the third instruction mentioned above) to enquire a maximum charging current the device to be charged 40 supports. The device to be charged 40 sends a reply instruction of Instruction 3 to indicate the maximum charging current the device to be charged 40 supports. Proceed to Stage 4.

Stage 4:

The power supply device 10 determines, according to the maximum charging current the device to be charged 40 supports, the charging current which is output by the power supply device 10 in the second charging mode and configured to charge the device to be charged 40. Proceed to Stage 5, the constant-current charging stage.

Stage 5:

After proceeding to the constant-current charging stage, the power supply device 10 can send Instruction 4 (corresponding to the fourth instruction mentioned above) to the device to be charged 40 at certain time intervals, so as to enquire current voltage of the battery 30 of the device to be charged 40. The device to be charged 40 can send a reply instruction of Instruction 4 to feed back the current voltage of the battery. The power supply device 10 can judge whether the charging interface is in a good contact and whether it is necessary to reduce the output current of the power supply device 10, according to the current voltage of the battery. When the power supply device 10 judges that there is contact failure in the charging interface, the power supply device 10 can send Instruction 5 (corresponding to the fifth instruction mentioned above), thereby exiting the second charging mode and being reset to return to Stage 1.

Alternatively, in some embodiments, in Stage 1, when the device to be charged 40 sends the reply instruction of Instruction 1, the reply instruction of Instruction 1 can carry path impedance data (or information) of the device to be charged 40. The path impedance data of the device to be charged 40 can be configured to judge whether the charging interface is in a good contact in the stage five.

Alternatively, in some embodiments, in Stage 2, duration from the device to be charged 40 agreeing that the power supply device 10 charges the device to be charged 40 in the second charging mode to the power supply device 10 adjusting the output voltage thereof to a suitable charging voltage can be controlled within a certain range. When the duration is beyond the certain range, the power supply device 10 or the device to be charged 40 can judge that the communication process is abnormal, being reset to return to Stage 1.

Alternatively, in some embodiments, in Stage 2, when the output voltage of the power supply device 10 is higher than the current voltage of the battery of the device to be charged 40 by $\Delta V$ ($\Delta V$ can be set between 200mV and 500 mV), the device to be charged 40 can send the reply instruction of Instruction 2 to indicate that the output voltage of the power supply device 10 matches the voltage of the battery of the device to be charged 40.

Alternatively, in some embodiments, in Stage 4, adjusting rate of the output current of the power supply device 10 can be controlled within a certain range, so as to avoid abnormality of the charging process resulting from excessively high adjusting rate.

Alternatively, in some embodiments, in Stage 5, change magnitude of the output current of the power supply device 10 can be controlled within 5%.

Alternatively, in some embodiments, in Stage 5, the power supply device 10 can detect in real time impedance of charging path. Specifically, the power supply device 10 can detect the impedance of charging path according to the output voltage and the output current of the power supply device 10 and the current voltage of the battery fed back by the device to be charged 40. When the impedance of charging path is higher than the impedance of path of the device to be charged 40 plus impedance of a charging cable, it indicates that there is contact failure in the charging interface, and thus the power supply device 10 stops charging the device to be charged 40 in the second charging mode.

Alternatively, in some embodiments, after the power supply device 10 enables the second charging mode to charge the device to be charged 40, time intervals of communication between the power supply device 10 and the device to be charged 40 can be controlled within a certain range, to avoid abnormality of communication resulting from excessively short time intervals of communication.

Alternatively, in some embodiments, stopping of the charging process (or stopping of the power supply device 10 charging the device to be charged 40 in the second charging mode) can include a recoverable stopping and a non-recoverable stopping.

For example, when it is detected that the battery of the device to be charged 40 is fully charged or there is contact failure in the charging interface, the charging process stops, a charging communication process is reset, and the charging process enters again Stage 1. Then, when the device to be charged 40 disagrees that the power supply device 10 charges the device to be charged 40 in the second charging mode, the communication procedure will not proceed to Stage 2. The stopping of the charging process in this case can be considered as the non-recoverable stopping.

For another example, when there is abnormality of the communication between the power supply device 10 and the device to be charged 40, the charging process stops, the charging communication process is reset, and the charging process enters again Stage 1. After requirements on Stage 1 are satisfied, the device to be charged 40 agrees that the power supply device 10 charges the device to be charged 40 in the second charging mode, so as to recover the charging process. The stopping of the charging process in this case can be considered as the recoverable stopping.

For yet another example, when the device to be charged 40 detects abnormality of the battery, the charging process stops and is reset to enter again Stage 1. Then, the device to be charged 40 disagrees that the power supply device 10 charges the device to be charged 40 in the second charging mode. After the battery returns to normal and the requirements on Stage 1 are satisfied, the device to be charged 40 agrees that the power supply device 10 charges the device to be charged 40 in the second charging mode. The stopping of the fast charging process in this case can be considered as the recoverable stopping.

The above communication steps or operations of FIG. 13 are just illustrative. For instance, in Stage 1, after the device to be charged 40 is coupled with the power supply device 10, handshake communication between the device to be charged 40 and the power supply device 10 can also be initiated by the device to be charged 40. In other words, the device to be charged 40 sends Instruction 1, to enquire whether the power supply device 10 enables the second charging mode. When the device to be charged 40 receives a reply instruction from the power supply device 10 indicating that the power supply device 10 agrees to charge the device to be charged 40 in the second charging mode, the power supply device 10 begins to charge the battery of the device to be charged 40 in the second charging mode.

For another instance, after Stage 5, the communication procedure can further include the constant-voltage charging stage. Specifically, in Stage 5, the device to be charged 40 can feed back the current voltage of the battery to the power supply device 10. When the current voltage of the battery reaches a threshold value of charging voltage in the constant-voltage charging stage, the charging stage turns to the constant-voltage charging stage from the constant-current charging stage. In the constant-voltage charging stage, the charging current gradually decreases. When the charging current decreases to a certain threshold value, it indicates that the battery of the device to be charged 40 is fully charged, and thus the whole charging process is completed and stopped.

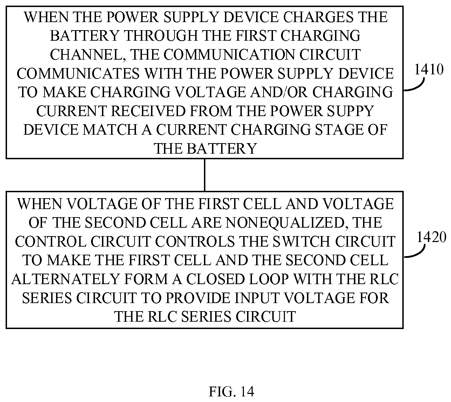

Apparatus embodiments of the disclosure are described in detail above in conjunction with FIG. 1 to FIG. 13. The following will describe in detail method embodiments of the disclosure in conjunction with FIG. 14. It should be understood that, description of method and description of apparatus correspond to each other. For simplicity, repeated description will be properly omitted.

FIG. 14 is a schematic flowchart illustrating first two steps of a battery management method according to the invention. In addition to the steps shown in FIG. 14, the inventive method comprises a further step of supplying power to the system of the device to be charged from one single cell. The battery management method illustrated in FIG. 14 is applicable to a battery management circuit including a first charging channel, an equalization circuit, and a communication circuit. The first charging channel is configured to receive charging voltage and/or charging current from a power supply device and charge a battery by applying directly the charging voltage and/or charging current to the battery. The battery includes a first cell and a second cell coupled in series. The equalization circuit is coupled with the first cell and the second cell and configured to equalize voltage of the first cell and voltage of the second cell. The equalization circuit includes an RLC series circuit, a switch circuit, and a control circuit. The switch circuit has one end coupled with the first cell and the second cell and another end coupled with the RLC series circuit, and the switch circuit has a control end coupled with the control circuit.

The first two steps of the battery management method includes operations at blocks 1410 to 1420. The following will describe the method in detail.

At block 1410, when the power supply device charges the battery through the first charging channel, the communication circuit communicates with the power supply device to make magnitude of the charging voltage and/or charging current received from the power supply device match a current charging-stage of the battery.

At block 1420, when the voltage of the first cell and the voltage of the second cell are nonequalized, the control circuit controls the switch circuit to make the first cell and the second cell alternately form a closed loop with the RLC series circuit to provide input voltage for the RLC series circuit.

Alternatively, in some embodiments, the control circuit controls the switch circuit to make frequency of input voltage of the RLC series circuit be equal to resonant frequency of the RLC series circuit.

Alternatively, in some embodiments, the switch circuit includes a first switch transistor, a second switch transistor, a third switch transistor, and a fourth switch transistor. The first switch transistor has a first connected end coupled with a positive electrode of the first cell and a second connected end coupled with a first connected end of the second switch transistor. The second switch transistor has a second connected end coupled with a first connected end of the third switch transistor and a negative electrode of the first cell. The third switch transistor has a second connected end coupled with a first connected end of the fourth switch transistor. The fourth switch transistor has a second connected end coupled with a negative electrode of the second cell. The second cell has a positive electrode coupled with a negative electrode of the first cell. The first switch transistor, the second switch transistor, the third switch transistor, and the fourth switch transistor each has a control end coupled with the control circuit. Components of the RLC series circuit are coupled in series between the second connected end of the first switch transistor and the second connected end of the third switch transistor.

Alternatively, in some embodiments, the switch circuit includes a first switch transistor, a second switch transistor, a third switch transistor, and a fourth switch transistor. The first switch transistor has a first connected end coupled with a positive electrode of the first cell and a second connected end coupled with a first connected end of the second switch transistor. The second switch transistor has a second connected end coupled with a first connected end of the third switch transistor. The third switch transistor having a second connected end coupled with a first connected end of the fourth switch transistor. The fourth switch transistor having a second connected end coupled with a negative electrode of the second cell. The second cell having a positive electrode coupled with a negative electrode of the first cell. The first switch transistor, the second switch transistor, the third switch transistor, and the fourth switch transistor each has a control end coupled with the control circuit. At least part of components of the RLC series circuit are coupled in series between the second connected end of the second switch transistor and the negative electrode of the first cell. Components of the RLC series circuit, other than the at least part of components of the RLC series circuit (that is, those coupled in series between the second connected end of the second switch transistor and the negative electrode of the first cell) are coupled in series between the second connected end of the first switch transistor and the second connected end of the third switch transistor.

Alternatively, in some embodiments, when the voltage of the first cell and the voltage of the second cell are nonequalized, operations at block 1420 can include the following. When the voltage of the first cell and the voltage of the second cell are nonequalized and the voltage of the first cell is higher than the voltage of the second cell, control the first switch transistor and the third switch transistor to an on-state from time t0 to time t1 and control the second switch transistor and the fourth switch transistor to an off-state from time t0 to time t1, where time t0 represents a start time of a work period of the control circuit; control the first switch transistor, the second switch transistor, the third switch transistor, and the fourth switch transistor to the off-state from time t1 to time t2, where a time period from time t1 to time t2 represents a preset first dead time; control the second switch transistor and the fourth switch transistor to the on-state from time t2 to time t3 and control the first switch transistor and the third switch transistor to the off-state from time t2 to time t3; control the first switch transistor, the second switch transistor, the third switch transistor, and the fourth switch transistor to the off-state from time t3 to time t4, where t4 represents an end time of the work period and a time period from time t3 to time t4 represents a preset second dead time.

Alternatively, in some embodiments, working frequency of the control circuit is equal to the resonant frequency of the RLC series circuit.

Alternatively, in some embodiments, when the voltage of the first cell and the voltage of the second cell are nonequalized, operations at block 1420 can include the following. When the voltage of the first cell and the voltage of the second cell are nonequalized and the voltage of the second cell is higher than the voltage of the first cell, control the second switch transistor and the fourth switch transistor to an on-state from time t0 to time t1 and control the first switch transistor and the third switch transistor to an off-state from time t0 to time t1, where time t0 represents a start time of a work period of the control circuit; control the first switch transistor, the second switch transistor, the third switch transistor, and the fourth switch transistor to the off-state from time t1 to time t2, where a time period from time t1 to time t2 represents a preset first dead time; control the first switch transistor and the third switch transistor to the on-state from time t2 to time t3 and control the second switch transistor and the fourth switch transistor to the off-state from time t2 to time t3; control the first switch transistor, the second switch transistor, the third switch transistor, and the fourth switch transistor to the off-state from time t3 to time t4, where time t4 represents an end time of the work period, and a time period from time t3 to time t4 represents a second dead time.

Alternatively, in some embodiments, working frequency of the control circuit is equal to the resonant frequency of the RLC series circuit.

Alternatively, in some embodiments, the battery management circuit further includes a second charging channel provided with a step-up circuit, The step-up circuit is configured to receive initial voltage from the power supply device and boost the initial voltage to a target voltage to charge the battery according to the target voltage, when the power supply device charges the battery through the second charging channel. The initial voltage is lower than total voltage of the battery and the target voltage is higher than the total voltage of the battery.

The above example illustrates the equalization circuit 22, as a part of the battery management circuit 20, providing an equalization method configured to equalize the voltage of the first cell 31a and the voltage of the second cell 31b, where the first cell 31a and the second cell 31b are coupled in series and managed by the battery management circuit 20. However, embodiments of the disclosure are not limited to the above example. Practically, the equalization circuit 22 can be applied to any situation where voltage between cells needs to be equalized.

Those of ordinary skill in the art will appreciate that units (including sub-units) and algorithmic operations of various examples described in connection with embodiments herein can be implemented by electronic hardware or by a combination of computer software and electronic hardware. Whether these functions are performed by means of hardware or software depends on the application and the design constraints of the associated technical solution. A professional technician may use different methods with regard to each particular application to implement the described functionality, but such methods should not be regarded as lying beyond the scope of the disclosure.

It will be evident to those skilled in the art that the corresponding processes of the above method embodiments can be referred to for the working processes of the foregoing systems, apparatuses, and units, for purposes of convenience and simplicity and will not be repeated herein.

It will be appreciated that the systems, apparatuses, and methods disclosed in embodiments herein may also be implemented in various other manners. For example, the above apparatus embodiments are merely illustrative, e.g., the division of units (including sub-units) is only a division of logical functions, and there may exist other ways of division in practice, e.g., multiple units (including sub-units) or components may be combined or may be integrated into another system, or some features may be ignored or not included. In other respects, the coupling or direct coupling or communication connection as illustrated or discussed may be an indirect coupling or communication connection through some interface, device or unit, and may be electrical, mechanical, or otherwise.

Separated units (including sub-units) as illustrated may or may not be physically separated. Components or parts displayed as units (including sub-units) may or may not be physical units, and may reside at one location or may be distributed to multiple networked units. Some or all of the units (including sub-units) may be selectively adopted according to practical needs to achieve desired objectives of the disclosure.

Additionally, various functional units (including sub-units) described in embodiments herein may be integrated into one processing unit or may be present as a number of physically separated units, and two or more units may be integrated into one.

If the integrated units are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. Computer software products can be stored in a storage medium and may include multiple instructions that, when executed, can cause a computing device, e.g., a personal computer, a server, a second adapter, a network device, etc., to execute some or all operations of the methods as described in the various embodiments. The above storage medium may include various kinds of media that can store program code, such as a USB flash disk, a mobile hard drive, a read-only memory (ROM), a random access memory (RAM), a magnetic disk, or an optical disk.

**Claims**

1. A charging system comprising a power supply device (10) and a device to be charged, wherein the power supply device is a power supply device with adjustable output voltage and is configured to be controlled to output a pulsating direct current, the device to be charged comprising:

   a battery (30); and
   a battery management circuit (20), the battery management circuit (20) comprising a first charging channel (21), an equalization circuit (22), and a communication circuit (23),
   the first charging channel (21) being configured to receive charging voltage and/or charging current from the power supply device and charge the battery, which is a lithium battery, by applying directly the charging voltage and/or charging current to the battery, and the battery comprising a first cell (31a) and a second cell (31b) coupled in series,
   wherein the charging current applied to the battery is a pulsating direct current;
   the communication circuit (23) being configured to communicate with the power supply device to make magnitude of the charging voltage and/or charging current received from the power supply device match a current charging stage of the battery, when the power supply device charges the battery through the first charging channel (21);
   the equalization circuit (22) being coupled with the first cell (31a) and the second cell (31b) and configured to equalize voltage of the first cell (31a) and voltage of the second cell (31b) ;
   the equalization circuit (22) comprising an RLC series circuit (25), a switch circuit (26), and a control circuit (27),
   the switch circuit (26) being connected with the first cell (31a) and the second cell (31b) and having an end coupled to the RLC series circuit (25) such that the switch circuit (26) can form a closed loop with the RLC series circuit (25) and either one of the first cell (31a) and the second cell (31b), and the switch circuit (26) having a control end (62, 65, 68, 71) coupled with the control circuit (27); and
the control circuit (27) being configured to control the switch circuit (26) to make the first cell (31a) and the second cell (31b) alternately form a closed loop with the RLC series circuit (25) to provide input voltage for the RLC series circuit (25), when the voltage of the first cell (31a) and the voltage of the second cell (31b) are nonequalized,
wherein one single cell is adopted to supply power to the system of the device to be charged.

2. The charging system of claim 1, the control circuit (27) being further configured to control the switch circuit (26) to make frequency of input voltage of the RLC series circuit (25) be equal to resonant frequency of the RLC series circuit (25).

3. The charging system of claim 1 or 2, the switch circuit (26) comprising a first switch transistor (Q1), a second switch transistor (Q2), a third switch transistor (Q3), and a fourth switch transistor (Q4), the first switch transistor (Q1) having a first connected end (60) coupled with a positive electrode of the first cell (31a) and a second connected end (61) coupled with a first connected end (63) of the second switch transistor (Q2); the second switch transistor (Q2) having a second connected end (64) coupled with a first connected end (66) of the third switch transistor (Q3) and a negative electrode of the first cell (31a); the third switch transistor (Q3) having a second connected end (67) coupled with a first connected end (69) of the fourth switch transistor (Q4); the fourth switch transistor (Q4) having a second connected end (70) coupled with a negative electrode of the second cell (31b); the second cell (31b) having a positive electrode coupled with a negative electrode of the first cell (31a); the first switch transistor (Q1), the second switch transistor (Q2), the third switch transistor (Q3), and the fourth switch transistor (Q4) each having a control end (62, 65, 68, 71) coupled with the control circuit (27); and
components of the RLC series circuit (25) being coupled between the second connected end (61) of the first switch transistor (Q1) and the second connected end (67) of the third switch transistor (Q3).

4. The charging system of claim 1 or 2, the switch circuit (26) comprising a first switch transistor (Q1), a second switch transistor (Q2), a third switch transistor (Q3), and a fourth switch transistor (Q4), the first switch transistor (Q1) having a first connected end (60) coupled with a positive electrode of the first cell (31a) and a second connected end (61) coupled with a first connected end (63) of the second switch transistor (Q2); the second switch transistor (Q2) having a second connected end (64) coupled with a first connected end (66) of the third switch transistor (Q3); the third switch transistor (Q3) having a second connected end (67) coupled with a first connected end (69) of the fourth switch transistor (Q4); the fourth switch transistor (Q4) having a second connected end (70) coupled with a negative electrode of the second cell (31b); the second cell (31b) having a positive electrode coupled with a negative electrode of the first cell (31a); the first switch, the second switch, the third switch, and the fourth switch each having a control end (62, 65, 68, 71) coupled with the control circuit (27); and
at least part of components of the RLC series circuit (25) being coupled between the second connected end (64) of the second switch transistor (Q2) and the negative electrode of the first cell (31a), and components of the RLC series circuit (25), other than those coupled in series between the second connected end (64) of the second switch transistor (Q2) and the negative electrode of the first cell (31a), being coupled in series between the second connected end (61) of the first switch transistor (Q1) and the second connected end (67) of the third switch transistor (Q3).

5. The charging system of claim 3 or 4, when the voltage of the first cell (31a) and the voltage of the second cell (31b) are nonequalized and the voltage of the first cell (31a) is higher than the voltage of the second cell (31b), the control circuit (27) being configured to:

    control the first switch transistor (Q1) and the third switch transistor (Q3) to an on-state from time t0 to time t1 and control the second switch transistor (Q2) and the fourth switch transistor (Q4) to an off-state from time t0 to time t1, time t0 representing a start time of a work period of the control circuit (27);
    control the first switch transistor (Q1), the second switch transistor (Q2), the third switch transistor (Q3), and the fourth switch transistor (Q4) to the off-state from time t1 to time t2, and a time period from time t1 to time t2 representing a preset first dead time;
    control the second switch transistor (Q2) and the fourth switch transistor (Q4) to the on-state from time t2 to time t3 and control the first switch transistor (Q1) and the third switch transistor (Q3) to the off-state from time t2 to time t3; and
    control the first switch transistor (Q1), the second switch transistor (Q2), the third switch transistor (Q3), and the fourth switch transistor (Q4)

to the off-state from time t3 to time t4, time t4 representing an end time of the work period, and a time period from time t3 to time t4 representing a preset second dead time.

6. The charging system of claim 3 or 4, when the voltage of the first cell (31a) and the voltage of the second cell (31b) are nonequalized and the voltage of the second cell (31b) is higher than the voltage of the first cell (31a), the control circuit (27) being configured to:

    control the second switch transistor (Q2) and the fourth switch transistor to an on-state from time t0 to time t1 and control the first switch transistor (Q1) and the third switch transistor (Q3) to an off-state from time t0 to time t1, time t0 representing a start time of a work period of the control circuit (27);
    control the first switch transistor (Q1), the second switch transistor (Q2), the third switch transistor (Q3), and the fourth switch transistor (Q4) to the off-state from time t1 to time t2, a time period from time t1 to time t2 representing a preset first dead time;
    control the first switch transistor (Q1) and the third switch transistor (Q3) to the on-state from time the t2 to time t3 and control the second switch transistor (Q2) and the fourth switch transistor (Q4) to the off-state from time t2 to time t3; and
    control the first switch transistor (Q1), the second switch transistor (Q2), the third switch transistor (Q3), and the fourth switch transistor (Q4) in the off-state from time t3 to time t4, time t4 representing an end time of the work period, and a time period from time t3 to time t4 representing a second dead time.

7. The charging system of any of claims 1 to 6, further comprising a second charging channel (24) provided with a step-up circuit (25), and the step-up circuit being configured to receive initial voltage from the power supply device and boost the initial voltage to a target voltage to charge the battery according to the target voltage, when the power supply device charges the battery through the second charging channel; the initial voltage being lower than total voltage of the battery and the target voltage being higher than the total voltage of the battery.

8. A battery management method, applicable to a charging system comprising a power supply device (10) and a device to be charged, wherein the power supply device is a power supply device with adjustable output voltage and is configured to be controlled to output a pulsating direct current, the device to be charged comprising:

a battery (30); and

a battery management circuit (20), the battery management circuit (20) comprising a first charging channel (21), an equalization circuit (22), and a communication circuit (23);

the first charging channel (21) being configured to receive charging voltage and/or charging current from the power supply device and charge the battery, which is a lithium battery, by applying directly the charging voltage and/or charging current to the battery, and the battery comprising a first cell (31a) and a second cell (31b) coupled in series,

wherein the charging current applied to the battery is a pulsating direct current;

the equalization circuit (22) being coupled with the first cell (31a) and the second cell (31b) and configured to equalize voltage of the first cell (31a) and voltage of the second cell (31b);

the equalization circuit (22) comprising an RLC series circuit (25), a switch circuit (26), and a control circuit (27), the switch circuit (26) being connected with the first cell (31a) and the second cell (31b) and having an end coupled to the RLC series circuit (25) such that the switch circuit (26) can form a closed loop with the RLC series circuit (25) and either one of the first cell (31a) and the second cell (31b), and the switch circuit (26) having a control end (62, 65, 68, 71) coupled with the control circuit (27);

the battery management method comprising:

the communication circuit (23) communicating with the power supply device to make magnitude of the charging voltage and/or charging current received from the power supply device match a current charging stage of the battery, when the power supply device charges the battery through the first charging channel (21);

the control circuit (27) controlling the switch circuit (26) to make the first cell (31a) and the second cell (31b) alternately form a closed loop with the RLC series circuit (25) to provide input voltage for the RLC series circuit (25), when the voltage of the first cell (31a) and the voltage of the second cell (31b) are nonequalized; and

supplying power to the system of the device to be charged from one single cell.

**Patentansprüche**

1. Ladesystem, das eine Stromversorgungsvorrichtung (10) und eine zu ladende Vorrichtung umfasst, wobei die Stromversorgungsvorrichtung eine Stromversorgungsvorrichtung mit einstellbarer Ausgangsspannung ist und konfiguriert ist, gesteuert zu werden, einen pulsierenden Gleichstrom auszugeben, und die zu ladende Vorrichtung Folgendes umfasst:

eine Batterie (30) und

eine Batteriemanagementschaltung (20), wobei die Batteriemanagementschaltung (20) einen ersten Ladekanal (21), eine Ausgleichsschaltung (22) und eine Kommunikationsschaltung (23) umfasst, wobei

der erste Ladekanal (21) konfiguriert ist, eine Ladespannung und/oder einen Ladestrom von der Stromversorgungsvorrichtung aufzunehmen und die Batterie, die eine Lithiumbatterie ist, durch direktes Anlegen der Ladespannung und/oder des Ladestroms an die Batterie zu laden, und die Batterie eine erste Zelle (31a) und eine zweite Zelle (31b), die in Reihe geschaltet sind, umfasst,

der Ladestrom, der in die Batterie eingeleitet wird, ein pulsierender Gleichstrom ist;

die Kommunikationsschaltung (23) konfiguriert ist, mit der Stromversorgungsvorrichtung zu kommunizieren, um eine Magnitude der Ladespannung und/oder des Ladestroms, die von der Stromversorgungsvorrichtung aufgenommen werden, mit einem aktuellen Ladezustand der Batterie übereinstimmend zu gestalten, wenn die Stromversorgungsvorrichtung die Batterie über den ersten Ladekanal (21) lädt;

die Ausgleichsschaltung (22) an die erste Zelle (31a) und die zweite Zelle (31b) gekoppelt ist und konfiguriert ist, die Spannung der ersten Zelle (31a) und die Spannung der zweiten Zelle (31b) auszugleichen;

die Ausgleichsschaltung (22) eine RLC-Reihenschaltung (25), eine Schalterschaltung (26) und eine Steuerungsschaltung (27) umfasst,

die Schalterschaltung (26) mit der ersten Zelle (31a) und der zweiten Zelle (31b) verbunden ist und ein Ende aufweist, das an die RLC-Reihenschaltung (25) gekoppelt ist, derart, dass die Schalterschaltung (26) eine geschlossene Schleife mit der RLC-Reihenschaltung (25) und der ersten Zelle (31a) oder der zweiten Zelle (31b) bilden kann, und die Schalterschaltung (26) ein Steuerungsende (62, 65, 68, 71) aufweist, das an die Steuerungsschaltung (27) gekoppelt ist;

die Steuerungsschaltung (27) konfiguriert ist, die Schalterschaltung (26) zu steuern, um zu bewirken, dass die erste Zelle (31a) und die zweite Zelle (31b) mit der RLC-Reihenschaltung (25) abwechselnd eine geschlossene Schleife bilden, um eine Eingangsspannung für die RLC-Reihenschaltung (25) bereitzustellen, wenn die Spannung der ersten Zelle (31a) und die Spannung der zweiten Zelle (31b) nicht ausgeglichen sind, und
eine einzelne Zelle ausgelegt ist, das System der zu ladenden Vorrichtung mit Energie zu versorgen.

2. Ladesystem nach Anspruch 1, wobei die Steuerungsschaltung (27) ferner konfiguriert ist, die Schalterschaltung (26) zu steuern, die Frequenz der Eingangsspannung der RLC-Reihenschaltung (25) gleich der Resonanzfrequenz der RLC-Reihenschaltung (25) zu gestalten.

3. Ladesystem nach Anspruch 1 oder 2, wobei die Schalterschaltung (26) einen ersten Schalttransistor (Q1), einen zweiten Schalttransistor (Q2), einen dritten Schalttransistor (Q3) und einen vierten Schalttransistor (Q4) umfasst, der erste Schalttransistor (Q1) ein erstes verbundenes Ende (60), das an eine positive Elektrode der ersten Zelle (31a) gekoppelt ist, und ein zweites verbundenes Ende (61), das an ein erstes verbundenes Ende (63) des zweiten Schalttransistors (Q2) gekoppelt ist, aufweist; der zweite Schalttransistor (Q2) ein zweites verbundenes Ende (64) aufweist, das an ein erstes verbundenes Ende (66) des dritten Schalttransistors (Q3) und eine negative Elektrode der ersten Zelle (31a) gekoppelt ist; der dritte Schalttransistor (Q3) ein zweites verbundenes Ende (67) aufweist, das an ein erstes verbundenes Ende (69) des vierten Schalttransistors (Q4) gekoppelt ist; der vierte Schalttransistor (Q4) ein zweites verbundenes Ende (70) aufweist, das an eine negative Elektrode der zweiten Zelle (31b) gekoppelt ist; die zweite Zelle (31b) eine positive Elektrode aufweist, die an eine negative Elektrode der ersten Zelle (31a) gekoppelt ist; und der erste Schalttransistor (Q1), der zweite Schalttransistor (Q2), der dritte Schalttransistor (Q3) und der vierte Schalttransistor (Q4) jeweils ein Steuerungsende (62, 65, 68, 71) aufweisen, das an die Steuerungsschaltung (27) gekoppelt ist; und Komponenten der RLC-Reihenschaltung (25) zwischen das zweite verbundene Ende (61) des ersten Schalttransistors (Q1) und das zweite verbundene Ende (67) des dritten Schalttransistors (Q3) gekoppelt sind.

4. Ladesystem nach Anspruch 1 oder 2, wobei die Schalterschaltung (26) einen ersten Schalttransistor (Q1), einen zweiten Schalttransistor (Q2), einen dritten Schalttransistor (Q3) und einen vierten Schalttransistor (Q4) umfasst, der erste Schalttransistor (Q1) ein erstes verbundenes Ende (60), das an eine positive Elektrode der ersten Zelle (31a) gekoppelt ist, und ein zweites verbundenes Ende (61), das an ein erstes verbundenes Ende (63) des zweiten Schalttransistors (Q2) gekoppelt ist, aufweist; der zweite Schalttransistor (Q2) ein zweites verbundenes Ende (64) aufweist, das an ein erstes verbundenes Ende (66) des dritten Schalttransistors (Q3) gekoppelt ist; der dritte Schalttransistor (Q3) ein zweites verbundenes Ende (67) aufweist, das an ein erstes verbundenes Ende (69) des vierten Schalttransistors (Q4) gekoppelt ist; der vierte Schalttransistor (Q4) ein zweites verbundenes Ende (70) aufweist, das an eine negative Elektrode der zweiten Zelle (31b) gekoppelt ist; die zweite Zelle (31b) eine positive Elektrode aufweist, die an eine negative Elektrode der ersten Zelle (31a) gekoppelt ist; und der erste Schalter, der zweite Schalter, der dritte Schalter und der vierte Schalter jeweils ein Steuerungsende (62, 65, 68, 71) aufweisen, das an die Steuerungsschaltung (27) gekoppelt ist; und mindestens ein Teil von Komponenten der RLC-Reihenschaltung (25) zwischen das zweite verbundene Ende (64) des zweiten Schalttransistors (Q2) und die negative Elektrode der ersten Zelle (31a) geschaltet ist und Komponenten der RLC-Reihenschaltung (25) außer denen, die zwischen dem zweiten verbundenen Ende (64) des zweiten Schalttransistors (Q2) und der negativen Elektrode der ersten Zelle (31a) in Reihe geschaltet sind, zwischen dem zweiten verbundenen Ende (61) des ersten Schalttransistors (Q1) und dem zweiten verbundenen Ende (67) des dritten Schalttransistors (Q3) in Reihe geschaltet sind.

5. Ladesystem nach Anspruch 3 oder 4, wobei dann, wenn die Spannung der ersten Zelle (31a) und die Spannung der zweiten Zelle (31b) nicht ausgeglichen sind und die Spannung der ersten Zelle (31a) größer als die Spannung der zweiten Zelle (31b) ist, die Steuerungsschaltung (27) konfiguriert ist zum

Steuern des ersten Schalttransistors (Q1) und des dritten Schalttransistors (Q3) zu einem Ein-Zustand von der Zeit t0 zur Zeit t1 und Steuern des zweiten Schalttransistors (Q2) und des vierten Schalttransistors (Q4) zu einem Aus-Zustand von der Zeit t0 zur Zeit t1, wobei die Zeit t0 eine Startzeit eines Arbeitszeitraums der Steuerungsschaltung (27) darstellt; Steuern des ersten Schalttransistors (Q1), des zweiten Schalttransistors (Q2), des dritten Schalttransistors (Q3) und des vierten Schalttransistors (Q4) zum Aus-Zustand von der Zeit t1 zur Zeit t2, wobei ein Zeitraum von der Zeit t1 zur Zeit t2 eine voreingestellte erste Totzeit darstellt; Steuern des zweiten Schalttransistors (Q2) und des vierten Schalttransistors (Q4) zum Ein-Zustand von der Zeit t2 zur Zeit t3 und Steuern des ersten Schalttransistors (Q1) und des dritten Schalttransistors (Q3) zum Aus-Zustand von der Zeit t2 zur Zeit t3; und Steuern des ersten Schalttransistors (Q1), des zweiten Schalttransistors (Q2), des dritten Schalttransistors (Q3) und des vierten Schalttransistors (Q4) zum Aus-Zustand von der Zeit t3 zur Zeit t4, wobei die Zeit t4 eine Endzeit des Arbeitszeitraums darstellt und ein Zeitraum von der Zeit t3 zur Zeit t4 eine voreingestellte zweite Totzeit darstellt.

6. Ladesystem nach Anspruch 3 oder 4, wobei dann, wenn die Spannung der ersten Zelle (31a) und die Spannung der zweiten Zelle (31b) nicht ausgeglichen sind und die Spannung der zweiten Zelle (31b) größer als die Spannung der ersten Zelle (31a) ist, die Steuerungsschaltung (27) konfiguriert ist zum

Steuern des zweiten Schalttransistors (Q2) und des vierten Schalttransistors zu einem Ein-Zustand von der Zeit t0 zur Zeit t1 und Steuern des ersten Schalttransistors (Q1) und des dritten Schalttransistors (Q3) zu einem Aus-Zustand von der Zeit t0 zur Zeit t1, wobei die Zeit t0 eine Startzeit eines Arbeitszeitraums der Steuerungsschaltung (27) darstellt;
Steuern des ersten Schalttransistors (Q1), des zweiten Schalttransistors (Q2), des dritten Schalttransistors (Q3) und des vierten Schalttransistors (Q4) zum Aus-Zustand von der Zeit t1 zur Zeit t2, wobei ein Zeitraum von der Zeit t1 zur Zeit t2 eine voreingestellte erste Totzeit darstellt;
Steuern des ersten Schalttransistors (Q1) und des dritten Schalttransistors (Q3) zum Ein-Zustand von der Zeit t2 zur Zeit t3 und Steuern des zweiten Schalttransistors (Q2) und des vierten Schalttransistors (Q4) zum Aus-Zustand von der Zeit t2 zur Zeit t3; und
Steuern des ersten Schalttransistors (Q1), des zweiten Schalttransistors (Q2), des dritten Schalttransistors (Q3) und des vierten Schalttransistors (Q4) im Aus-Zustand von der Zeit t3 zur Zeit t4, wobei die Zeit t4 eine Endzeit des Arbeitszeitraums darstellt und ein Zeitraums von der Zeit t3 zur Zeit t4 eine zweite Totzeit darstellt.

7. Ladesystem nach einem der Ansprüche 1 bis 6, das ferner einen zweiten Ladekanal (24) umfasst, der mit einer Hochsetzschaltung (25) versehen ist, wobei die Hochsetzschaltung konfiguriert ist, eine An-fangsspannung von der Stromversorgungsvorrich-tung aufzunehmen und die Anfangsspannung zu einer Zielspannung zu verstärken, um die Batterie gemäß der Zielspannung zu laden, wenn die Stromversorgungsvorrichtung die Batterie durch den zweiten Ladekanal lädt; und die Anfangsspannung kleiner als die Gesamtspannung der Batterie ist und die Zielspannung höher als die Gesamtspannung der Batterie ist.

8. Batteriemanagementverfahren, das auf ein Ladesystem anwendbar ist, das eine Stromversorgungsvorrichtung (10) und eine zu ladende Vorrichtung umfasst, wobei die Stromversorgungsvorrichtung eine Stromversorgungsvorrichtung mit einstellbarer Ausgangsspannung ist und konfiguriert ist, gesteuert zu werden, einen pulsierenden Gleichstrom auszugeben, und die zu ladende Vorrichtung Folgendes umfasst:

eine Batterie (30) und
eine Batteriemanagementschaltung (20), wobei die Batteriemanagementschaltung (20) einen ersten Ladekanal (21), eine Ausgleichsschaltung (22) und eine Kommunikationsschaltung (23) umfasst; wobei
der erste Ladekanal (21) konfiguriert ist, eine Ladespannung und/oder einen Ladestrom von der Stromversorgungsvorrichtung aufzunehmen und die Batterie, die eine Lithiumbatterie ist, durch direktes Anlegen der Ladespannung und/oder des Ladestroms an die Batterie zu laden, und die Batterie eine erste Zelle (31a) und eine zweite Zelle (31b), die in Reihe geschaltet sind, umfasst,
der Ladestrom, der in die Batterie eingeleitet wird, ein pulsierender Gleichstrom ist;
die Ausgleichsschaltung (22) an die erste Zelle (31a) und die zweite Zelle (31b) gekoppelt ist und konfiguriert ist, die Spannung der ersten Zelle (31a) und die Spannung der zweiten Zelle (31b) auszugleichen;
die Ausgleichsschaltung (22) eine RLC-Reihenschaltung (25), eine Schalterschaltung (26) und eine Steuerungsschaltung (27) umfasst, die Schalterschaltung (26) mit der ersten Zelle (31a) und der zweiten Zelle (31b) verbunden ist und ein Ende aufweist, das an die RLC-Reihenschaltung (25) gekoppelt ist, derart, dass die Schalterschaltung (26) eine geschlossene Schleife mit der RLC-Reihenschaltung (25) und der ersten Zelle (31a) oder der zweiten Zelle (31b) bilden kann, und die Schalterschaltung (26) ein Steuerungsende (62, 65, 68, 71) aufweist, das an die Steuerungsschaltung (27) gekoppelt ist; und
das Batteriemanagementverfahren Folgendes umfasst:

die Kommunikationsschaltung (23) kom-muniziert mit der Stromversorgungsvorrich-tung, um eine Magnitude der Ladespannung und/oder des Ladestroms, die von der Stromversorgungsvorrichtung aufgenommen werden, mit einem aktuellen Ladezustand der Batterie übereinstimmend zu ge-stalten, wenn die Stromversorgungsvor-richtung die Batterie über den ersten Ladekanal (21) lädt;

die Steuerungsschaltung (27) steuert die Schalterschaltung (26), um zu bewirken, dass die erste Zelle (31a) und die zweite Zelle (31b) mit der RLC-Reihenschaltung (25) abwechselnd eine geschlossene Schleife bilden, um eine Eingangsspannung für die RLC-Reihenschaltung (25) bereitzustellen, wenn die Spannung der ersten Zelle (31a) und die Spannung der zweiten Zelle (31b) nicht ausgeglichen sind; und Versorgen des Systems der zu ladenden Vorrichtung mit Leistung von einer einzelnen Zelle.

## Revendications

1. Système de charge comprenant un dispositif d'alimentation électrique (10) et un dispositif à charger, le dispositif d'alimentation électrique étant un dispositif d'alimentation électrique avec une tension de sortie réglable et étant configuré pour être commandé pour délivrer un courant continu pulsatoire, le dispositif à charger comprenant :

une batterie (30) ; et
un circuit de gestion de batterie (20), le circuit de gestion de batterie (20) comprenant un premier canal de charge (21), un circuit d'égalisation (22) et un circuit de communication (23),
le premier canal de charge (21) étant configuré pour recevoir une tension de charge et/ou un courant de charge provenant du dispositif d'alimentation électrique et charger la batterie, qui est une batterie au lithium, en appliquant directement la tension de charge et/ou le courant de charge à la batterie, et la batterie comprenant une première cellule (31a) et une deuxième cellule (31b) couplées en série,
le courant de charge appliqué à la batterie étant un courant continu pulsatoire ;
le circuit de communication (23) étant configuré pour communiquer avec le dispositif d'alimentation électrique pour faire en sorte que l'amplitude de la tension de charge et/ou du courant de charge reçus du dispositif d'alimentation électrique correspondent à un étage de charge de courant de la batterie, lorsque le dispositif d'alimentation électrique charge la batterie à travers le premier canal de charge (21) ;
le circuit d'égalisation (22) étant couplé à la première cellule (31a) et à la deuxième cellule (31b) et configuré pour égaliser une tension de la première cellule (31a) et une tension de la deuxième cellule (31b) ;
le circuit d'égalisation (22) comprenant un circuit en série RLC (25), un circuit de commutation (26) et un circuit de commande (27),
le circuit de commutation (26) étant connecté à la première cellule (31a) et à la deuxième cellule (31b) et ayant une extrémité couplée au circuit en série RLC (25) de sorte que le circuit de commutation (26) peut former une boucle fermée avec le circuit en série RLC (25) et l'une ou l'autre de la première cellule (31a) et de la deuxième cellule (31b), et le circuit de commutation (26) ayant une extrémité de commande (62, 65, 68, 71) couplée au circuit de commande (27) ; et
le circuit de commande (27) étant configuré pour commander au circuit de commutation (26) de faire en sorte que la première cellule (31a) et la deuxième cellule (31b) forment alternativement une boucle fermée avec le circuit en série RLC (25) pour fournir une tension d'entrée pour le circuit en série RLC (25), lorsque la tension de la première cellule (31a) et la tension de la deuxième cellule (31b) ne sont pas égalisées, une seule cellule étant adoptée pour fournir de l'énergie au système du dispositif à charger.

2. Système de charge selon la revendication 1, le circuit de commande (27) étant configuré en outre pour commander au circuit de commutation (26) de faire en sorte qu'une fréquence de tension d'entrée du circuit en série RLC (25) soit égale à une fréquence résonnante du circuit en série RLC (25).

3. Système de charge selon la revendication 1 ou 2, le circuit de commutation (26) comprenant un premier transistor de commutation (Q1), un deuxième transistor de commutation (Q2), un troisième transistor de commutation (Q3) et un quatrième transistor de commutation (Q4), le premier transistor de commutation (Q1) ayant une première extrémité connectée (60) couplée à une électrode positive de la première cellule (31a) et une deuxième extrémité connectée (61) couplée à une première extrémité connectée (63) du deuxième transistor de commutation (Q2) ; le deuxième transistor de commutation (Q2) ayant une deuxième extrémité connectée (64) couplée à une première extrémité connectée (66) du troisième transistor de commutation (Q3) et à une électrode négative de la première cellule (31a) ; le troisième transistor de commutation (Q3) ayant une deuxième extrémité connectée (67) couplée à une première extrémité connectée (69) du quatrième transistor de commutation (Q4) ; le quatrième transistor de commutation (Q4) ayant une deuxième extrémité connectée (70) couplée à une électrode négative de la deuxième cellule (31b) ; la deuxième cellule (31b) ayant une électrode positive couplée à une électrode négative de la première cellule (31a) ; le premier transistor de commutation (Q1), le deuxième transistor de commutation (Q2), le troisième transistor de commutation (Q3) et le quatrième transistor de commutation (Q4) ayant chacun une extrémité de commande (62, 65, 68, 71) couplée au circuit de commande (27) ; et

des composants du circuit en série RLC (25) étant couplés entre la deuxième extrémité connectée (61) du premier transistor de commutation (Q1) et la deuxième extrémité connectée (67) du troisième transistor de commutation (Q3).

4. Système de charge selon la revendication 1 ou 2, le circuit de commutation (26) comprenant un premier transistor de commutation (Q1), un deuxième transistor de commutation (Q2), un troisième transistor de commutation (Q3) et un quatrième transistor de commutation (Q4), le premier transistor de commutation (Q1) ayant une première extrémité connectée (60) couplée à une électrode positive de la première cellule (31a) et une deuxième extrémité connectée (61) couplée à une première extrémité connectée (63) du deuxième transistor de commutation (Q2) ; le deuxième transistor de commutation (Q2) ayant une deuxième extrémité connectée (64) couplée à une première extrémité connectée (66) du troisième transistor de commutation (Q3) ; le troisième transistor de commutation (Q3) ayant une deuxième extrémité connectée (67) couplée à une première extrémité connectée (69) du quatrième transistor de commutation (Q4) ; le quatrième transistor de commutation (Q4) ayant une deuxième extrémité connectée (70) couplée à une électrode négative de la deuxième cellule (31b) ; la deuxième cellule (31b) ayant une électrode positive couplée à une électrode négative de la première cellule (31a) ; le premier commutateur, le deuxième commutateur, le troisième commutateur et le quatrième commutateur ayant chacun une extrémité de commande (62, 65, 68, 71) couplée au circuit de commande (27) ; et

au moins une partie des composants du circuit en série RLC (25) étant couplée entre la deuxième extrémité connectée (64) du deuxième transistor de commutation (Q2) et l'électrode négative de la première cellule (31a), et des composants du circuit en série RLC (25), autres que ceux couplés en série entre la deuxième extrémité connectée (64) du deuxième transistor de commutation (Q2) et l'électrode négative de la première cellule (31a), étant couplés en série entre la deuxième extrémité connectée (61) du premier transistor de commutation (Q1) et la deuxième extrémité connectée (67) du troisième transistor de commutation (Q3).

5. Système de charge selon la revendication 3 ou 4, lorsque la tension de la première cellule (31a) et la tension de la deuxième cellule (31b) ne sont pas égalisées et que la tension de la première cellule (31a) est supérieure à la tension de la deuxième cellule (31b), le circuit de commande (27) étant configuré pour :

commander le premier transistor de commutation (Q1) et le troisième transistor de commutation (Q3) à un état allumé passant du temps t0 au temps t1 et commander le deuxième transistor de commutation (Q2) et le quatrième transistor de commutation (Q4) à un état éteint du temps t0 au temps t1, le temps t0 représentant un temps de début d'une période de fonctionnement du circuit de commande (27) ;

commander le premier transistor de commutation (Q1), le deuxième transistor de commutation (Q2), le troisième transistor de commutation (Q3) et le quatrième transistor de commutation (Q4) à un état éteint du temps t1 au temps t2, et une période de temps du temps t1 au temps t2 représentant un premier temps mort prédéfini ;

commander le deuxième transistor de commutation (Q2) et le quatrième transistor de commutation (Q4) à l'état allumé passant du temps t2 au temps t3 et commander le premier transistor de commutation (Q1) et le troisième transistor de commutation (Q3) à l'état éteint du temps t2 au temps t3 ; et

commander le premier transistor de commutation (Q1), le deuxième transistor de commutation (Q2), le troisième transistor de commutation (Q3) et le quatrième transistor de commutation (Q4) à l'état éteint du temps t3 au temps t4, le temps t4 représentant un temps de fin de la période de fonctionnement, et une période de temps du temps t3 au temps t4 représentant un deuxième temps mort prédéfini.

6. Système de charge selon la revendication 3 ou 4, lorsque la tension de la première cellule (31a) et la tension de la deuxième cellule (31b) ne sont pas égalisées et que la tension de la deuxième cellule (31b) est supérieure à la tension de la première cellule (31a), le circuit de commande (27) étant configuré pour :

commander le deuxième transistor de commutation (Q2) et le quatrième transistor de commutation à un état allumé passant du temps t0 au temps t1 et commander le premier transistor de commutation (Q1) et le troisième transistor de commutation (Q3) à un état éteint du temps t0 au temps t1, le temps t0 représentant un temps de début d'une période de fonctionnement du circuit de commande (27) ;

commander le premier transistor de commutation (Q1), le deuxième transistor de commutation (Q2), le troisième transistor de commutation (Q3) et le quatrième transistor de commutation (Q4) à l'état éteint du temps t1 au temps t2, une période de temps du temps t1 au temps t2 représentant un premier temps mort prédéfini ; commander le premier transistor de commutation (Q1) et le troisième transistor de commutation (Q3) à l'état allumé passant du temps t2 au temps t3 et commander le deuxième transistor de commutation (Q2) et le quatrième transistor de commutation (Q4) à l'état éteint du temps t2 au temps t3 ; et

commander le premier transistor de commutation (Q1), le deuxième transistor de commutation (Q2), le troisième transistor de commutation (Q3) et le quatrième transistor de commutation (Q4) dans l'état éteint du temps t3 au temps t4, le temps t4 représentant un temps de fin de la période de fonctionnement, et une période de temps du temps t3 au temps t4 représentant un deuxième temps mort.

7. Système de charge selon l'une quelconque des revendications 1 à 6, comprenant en outre un deuxième canal de charge (24) pourvu d'un circuit élévateur (25), et le circuit élévateur étant configuré pour recevoir une tension initiale du dispositif d'alimentation électrique et amplifier la tension initiale à une tension cible pour charger la batterie en fonction de la tension cible, lorsque le dispositif d'alimentation électrique charge la batterie à travers le deuxième canal de charge ; la tension initiale étant inférieure à une tension totale de la batterie et la tension cible étant supérieure à la tension totale de la batterie.

8. Procédé de gestion de batterie, applicable à un système de charge comprenant un dispositif d'alimentation électrique (10) et un dispositif à charger, le dispositif d'alimentation électrique étant un dispositif d'alimentation électrique avec une tension de sortie réglable et étant configuré pour être commandé pour délivrer un courant continu pulsatoire, le dispositif à charger comprenant :

une batterie (30) ; et
un circuit de gestion de batterie (20), le circuit de gestion de batterie (20) comprenant un premier canal de charge (21), un circuit d'égalisation (22) et un circuit de communication (23) ;
le premier canal de charge (21) étant configuré pour recevoir une tension de charge et/ou un courant de charge provenant du dispositif d'alimentation électrique et charger la batterie, qui est une batterie au lithium, en appliquant directement la tension de charge et/ou le courant de charge à la batterie, et la batterie comprenant une première cellule (31a) et une deuxième cellule (31b) couplées en série,
le courant de charge appliqué à la batterie étant un courant continu pulsatoire ;
le circuit d'égalisation (22) étant couplé à la première cellule (31a) et à la deuxième cellule (31b) et configuré pour égaliser une tension de la première cellule (31a) et une tension de la deuxième cellule (31b) ;
le circuit d'égalisation (22) comprenant un circuit en série RLC (25), un circuit de commutation (26) et un circuit de commande (27),
le circuit de commutation (26) étant connecté à la première cellule (31a) et à la deuxième cellule (31b) et ayant une extrémité couplée au circuit en série RLC (25) de sorte que le circuit de commutation (26) peut former une boucle fermée avec le circuit en série RLC (25) et l'une ou l'autre de la première cellule (31a) et de la deuxième cellule (31b), et le circuit de commutation (26) ayant une extrémité de commande (62, 65, 68, 71) couplée au circuit de commande (27) ;
le procédé de gestion de batterie comprenant :

le circuit de communication (23) communiquant avec le dispositif d'alimentation électrique pour faire en sorte que l'amplitude de la tension de charge et/ou du courant de charge reçus du dispositif d'alimentation électrique correspondent à un étage de charge de courant de la batterie, lorsque le dispositif d'alimentation électrique charge la batterie à travers le premier canal de charge (21) ;
le circuit de commande (27) commandant au circuit de commutation (26) de faire en sorte que la première cellule (31a) et la deuxième cellule (31b) forment alternativement une boucle fermée avec le circuit en série RLC (25) pour fournir une tension d'entrée pour le circuit en série RLC (25), lorsque la tension de la première cellule (31a) et la tension de la deuxième cellule (31b) ne sont pas égalisées ; et
fournir de l'énergie au système du dispositif à charger en provenance d'une seule cellule.

POWER SUPPLY DEVICE

COMMUNICATION CIRCUIT

EQUALIZATION CIRCUIT

FIG. 1

RLC SERIES CIRCUIT

CONTROL CIRCUIT

SWITCH CIRUIT

FIG. 2

R

L

VG1

C

FIG. 3

FIG. 4

FIG. 5

FIG. 6

FIG. 7

CONTROL THE FIRST SWITCH TRANSISTOR Q1 AND THE THIRD SWITCH TRANSISTOR Q3 TO AN ON-STATE FROM TIME t0 TO TIME t1, AND CONTROL THE SECOND SWITCH TRANSISTOR Q2 AND THE FOURTH SWITCH TRANSISTOR Q4 TO AN OFF-STATE FROM TIME t0 TO TIME t1  ⸜810

CONTROL THE FIRST SWITCH TRANSISTOR Q1, THE SECOND SWITCH TRANSISTOR Q2, THE THIRD SWITCH TRANSISTOR Q3, AND THE FOURTH SWITCH TRANSISTOR Q4 TO THE OFF-STATE FROM TIME t1 TO TIME t2  ⸜820

CONTROL THE SECOND SWITCH TRANSISTOR Q2 AND THE FOURTH SWITCH TRANSISTOR Q4 TO THE ON-STATE FROM TIME t2 TO TIME t3, AND CONTROL THE FIRST SWITCH TRANSISTOR Q1 AND THE THIRD SWITCH TRANSISTOR Q3 TO THE OFF-STATE FROM TIME t2 TO TIME t3  ⸜830

CONTROL THE FIRST SWITCH TRANSISTOR Q1, THE SECOND SWITCH TRANSISTOR Q2, THE THIRD SWITCH TRANSISTOR Q3, AND THE FOURTH SWITCH TRANSISTOR Q4 TO THE OFF-STATE FROM TIME t3 TO TIME t4  ⸜840

FIG. 8

CONTROL THE SECOND SWITCH TRANSISTOR Q2 AND THE FOURTH SWITCH TRANSISTOR Q4 TO AN ON-STATE FROM TIME t0 TO TIME t1, AND CONTROL THE FIRST SWITCH TRANSISTOR Q1 AND THE THIRD SWITCH TRANSISTOR Q3 TO AN OFF-STATE FROM TIME t0 TO TIME t1 ⟋ 910

CONTROL THE FIRST SWITCH TRANSISTOR Q1, THE SECOND SWITCH TRANSISTOR Q2, THE THIRD SWITCH TRANSISTOR Q3, AND THE FOURTH SWITCH TRANSISTOR Q4 TO THE OFF-STATE FROM TIME t1 TO TIME t2 ⟋ 920

CONTROL THE FIRST SWITCH TRANSISTOR Q1 AND THE THIRD SWITCH TRANSISTOR Q3 TO THE ON-STATE FROM TIME t2 TO TIME t3, AND CONTROL THE SECOND SWITCH TRANSISTOR Q2 AND THE FOURTH SWITCH TRANSISTOR Q4 TO THE OFF STATE FROM TIME t2 TO TIME t3 ⟋ 930

⟋ 940

CONTROL THE FIRST SWITCH TRANSISTOR Q1, THE SECOND SWITCH TRANSISTOR Q2, THE THIRD SWITCH TRANSISTOR Q3, AND THE FOURTH SWITCH TRANSISTOR Q4 TO THE OFF-STATE FROM TIME t3 TO TIME t4

FIG. 9

FIG. 10

FIG. 11

FIG. 12

FIG. 13

WHEN THE POWER SUPPLY DEVICE CHARGES THE
BATTERY THROUGH THE FIRST CHARGING
CHANNEL, THE COMMUNICATION CIRCUIT
COMMUNICATES WITH THE POWER SUPPLY DEVICE
TO MAKE CHARGING VOLTAGE AND/OR CHARGING
CURRENT RECEIVED FROM THE POWER SUPPY
DEVICE MATCH A CURRENT CHARGING STAGE OF
THE BATTERY

1410

WHEN VOLTAGE OF THE FIRST CELL AND VOLTAGE
OF THE SECOND CELL ARE NONEQUALIZED, THE
CONTROL CIRCUIT CONTROLS THE SWITCH CIRCUIT
TO MAKE THE FIRST CELL AND THE SECOND CELL
ALTERNATELY FORM A CLOSED LOOP WITH THE RLC
SERIES CIRCUIT TO PROVIDE INPUT VOLTAGE FOR
THE RLC SERIES CIRCUIT

1420

FIG. 14

**REFERENCES CITED IN THE DESCRIPTION**

**Patent documents cited in the description**

- US 20160064962 A1
- EP 3051660 A1
- US 6040684 A